# EUROPEAN PATENT SPECIFICATION

(11) **EP 3 886 497 B1**
(45) Date of publication and mention of the grant of the patent: **18.12.2024**
(21) Application number: 19892306.2
(22) Date of filing: 03.12.2019
(51) Int. Cl.: H04W 36/08, H04J 3/06, H04W 56/00

(54) **SYNCHRONIZATION OF A TSN NETWORK COMPRISING A CU-DU ARCHITECTURE**
SYNCHRONISATION EINES TSN-NETZWERKS, DAS EINE CU-DU-ARCHITEKTUR UMFASST
SYNCHRONISATION D'UN RÉSEAU TSN COMPRENANT UNE ARCHITECTURE CU-DU

(30) Priority: 07.12.2018 CN 201811496817
(43) Date of publication of application: 29.09.2021
(73) Proprietor: Huawei Technologies Co., Ltd., Longgang District Shenzhen, Guangdong 518129 (CN)
(72) Inventor: HU, Xingxing, Shenzhen, Guangdong 518129 (CN); ZHANG, Hongping, Shenzhen, Guangdong 518129 (CN); ZENG, Qinghai, Shenzhen, Guangdong 518129 (CN)
(74) Representative: Gill Jennings & Every LLP
(86) International application number: PCT/CN2019/122703
(87) International publication number: WO 2020/114391

(56) References cited:
- EP-B1- 2 984 900
- WO-A1-2011/137561
- CN-A- 102 244 907
- CN-A- 103 874 153
- CN-A- 104 782 178
- CN-A- 104 782 178
- CN-U- 201 550 284
- VIVO: "Discussion on the time synchronization within RAN for supporting IIOT", vol. RAN WG2, no. Spokane, USA; 20181112 - 20181116, 2 November 2018 (2018-11-02), XP051480874, Retrieved from the Internet <URL:http://www.3gpp.org/ftp/tsg%5Fran/WG2%5FRL2/TSGR2%5F104/Docs/R2%2D1816935%2Ezip> [retrieved on 20181102]
- HUAWEI ET AL: "Corrections on time reference information", vol. RAN WG2, no. Chengdu, China; 20181008 - 20181012, 28 September 2018 (2018-09-28), XP051524574, Retrieved from the Internet <URL:http://www.3gpp.org/ftp/tsg%5Fran/WG2%5FRL2/TSGR2%5F103bis/Docs/R2%2D1815216%2Ezip> [retrieved on 20180928]
- CATT: "Considerations on synchronization between nodes in 5GS", vol. RAN WG3, no. Spokane, WA, USA; 20181112 - 20181116, 2 November 2018 (2018-11-02), XP051482519, Retrieved from the Internet <URL:http://www.3gpp.org/ftp/tsg%5Fran/WG3%5FIu/TSGR3%5F102/Docs/R3%2D186369%2Ezip> [retrieved on 20181102]
- HUAWEI: "Consideration on the accurate reference timing in TSN for I-IoT", vol. RAN WG3, no. Chengdu, China; 20181008 - 20181012, 29 September 2018 (2018-09-29), XP051529077, Retrieved from the Internet <URL:http://www.3gpp.org/ftp/tsg%5Fran/WG3%5FIu/TSGR3%5F101bis/Docs/R3%2D185808%2Ezip> [retrieved on 20180929]

## Description

### TECHNICAL FIELD

This application relates to the field of wireless communications technologies, and in particular, to a communications method and system for synchronization of a TSN network comprising a CU-DU architecture

### BACKGROUND

With development of communications requirements, low-latency performance needs to be ensured for more services. For example, an ultra-reliable low-latency communications (ultra reliable low latency commnications, URLLC) service requires a latency within 0.5 ms. Therefore, to ensure service performance, an operator needs to learn of latency performance of a current network.

In a handover scenario, a source base station needs to transfer, to a target base station, a downlink data unit that is received from a core network and that has not been correctly received by a terminal device and an out-of-order uplink data unit that is received from the terminal device. Out-of-order means that some data units before a data unit correctly received by the source base station from a terminal are not correctly received by the source base station (for example, a packet 2/3 is received, but a packet 1 is not received yet). To obtain a transmission delay of a data unit between a base station and a terminal device, one piece of information about a time is carried in a protocol data unit (protocol data unit, PDU) corresponding to a transmit end. For example, the information about the time is carried in a packet data convergence protocol (packet data convergence protocol, PDCP) PDU or a service data adaptation protocol (service data adaptation protocol, SDAP) PDU.

VIVO: "Discussion on the time synchronization within RAN for supporting IIOT", 3GPP DRAFT, XP051480874 describes accurate reference timing for time sensitive network enhancement. HUAWEI ET AL: "Corrections on time reference information", 3GPP DRAFT, XP051524574 describes the usage of time reference information. CATT: "Considerations on synchronization between nodes in 5GS", 3GPP DRAFT, XP051482519 describes how to deliver time information to gNBs operating in a time sensitive network. HUAWEI: "Consideration on the accurate reference timing in TSN for I-IoT", 3GPP DRAFT, XP051529077 describes enhancing TSN by improving accuracy of reference timing.

### SUMMARY

This application provides a communications method and apparatus, to accurately determine information about a time in a data unit handover transmission process. The invention is defined by the appended independent claims. Preferred embodiments are set out in the dependent claims. Further "Aspects" or "embodiments" included in the description are useful aids for understanding the invention.

### BRIEF DESCRIPTION OF DRAWINGS

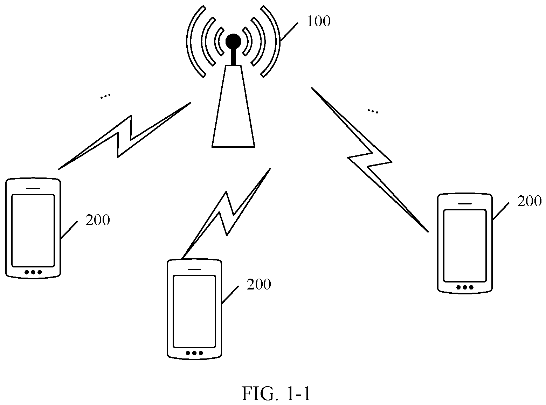

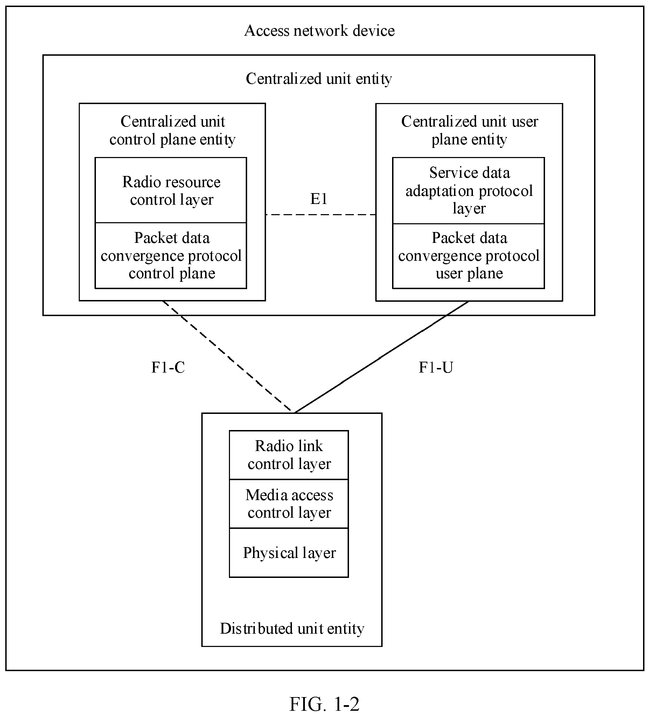

FIG. 1-1 is a schematic diagram of a communications system according to this application;
FIG. 1-2 is a schematic diagram of a protocol stack of an access network device having an architecture in which a CU entity and a DU entity are separated according to an embodiment of this application;
FIG. 2 is a schematic flowchart of a communications method according to an embodiment of this application;
FIG. 3 is a schematic diagram of a packet format in which a header of an SDAP PDU carries information about a time;
FIG. 4 is an example of a schematic diagram of determining information about a time;
FIG. 5 is an example of a schematic flowchart in which a transmit end device determines information about a second time;
FIG. 6 is a schematic diagram of a packet format in which a header of a PDCP PDU carries information about a time;
FIG. 7 is a schematic diagram of a format in which a GTP-U extension header carries information about a time;
FIG. 8 is an example of another schematic diagram of determining information about a time;
FIG. 9 is a schematic flowchart of another communications method according to an embodiment of this application;
FIG. 10 is a schematic flowchart of still another communications method according to an embodiment of this application;
FIG. 11 is an example of a schematic flowchart in which a receive end device determines information about a second time;
FIG. 12 is a schematic flowchart of still another communications method according to an embodiment of this application;
FIG. 13 is a schematic structural diagram of a communications apparatus according to an embodiment of this application;
FIG. 14 is a schematic structural diagram of still another communications apparatus according to an embodiment of this application; and
FIG. 15 is a schematic structural diagram of still another communications apparatus according to an embodiment of this application.

### DESCRIPTION OF EMBODIMENTS

The following describes embodiments of the present invention with reference to accompanying drawings in the embodiments of the present invention.

FIG. 1-1 is a schematic diagram of a communications system according to this application. The communications system may include at least one network device 100 (only one network device is shown in the figure) and one or more terminal devices 200 connected to the network device 100.

The network device 100 may be a device that can communicate with the terminal device 200. The network device 100 may be any device having a wireless transceiver function, including but is not limited to a NodeB NodeB, an evolved NodeB eNodeB, a base station in a fifth generation (the fifth generation, 5G) communications system, a base station or a network device in a future communications system, an access node in a Wi-Fi system, a wireless relay node, a wireless backhaul node, and the like. Alternatively, the network device 100 may be a radio controller in a cloud radio access network (cloud radio access network, CRAN) scenario. Alternatively, the network device 100 may be a small cell, a transmission node (transmission reference point, TRP), or the like. A specific technology and a specific device form that are used by the network device are not limited in the embodiments of this application.

The terminal device 200 is a device having a wireless transceiver function, may be deployed on land, indoor or outdoor, and may be handheld, wearable, or vehicle-mounted; or may be deployed on a water surface, for example, on a ship; or may be deployed in the air, for example, on a plane, a balloon, and a satellite. The terminal device may be a mobile phone (mobile phone), a pad (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. The terminal device may also be referred to as user equipment (user equipment, UE), an access terminal device, a UE unit, a mobile station, a mobile console, a remote station, a remote terminal device, a mobile device, a terminal (terminal), a wireless communications device, a UE proxy, a UE apparatus, or the like sometimes.

It should be noted that, terms "system" and "network" in the embodiments of the present invention may be used interchangeably. "A plurality of" means two or more. In view of this, "a plurality of" may also be understood as "at least two" in the embodiments of the present invention. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

For ease of understanding, several concepts in the embodiments of this application are first described. The concepts are merely intended to help understand examples in this application, and do not limit the embodiments of this application.

A radio resource control (radio resource control, RRC) layer is a protocol layer in a communications system, and is used to perform broadcast, paging, RRC link establishment, radio bearer control, mobility, measurement and reporting control of a terminal device, and the like.

A service data adaptation protocol (service data adaptation protocol, SDAP) layer is a new protocol layer introduced in 5G, and is responsible for mapping each quality of service (quality of service, QoS) flow (flow) sent by a core network or an application layer to a data resource bearer (data resource bearer, DRB) of a radio access stratum. In other words, according to a service attribute corresponding to the QoS flow, a data unit corresponding to the QoS flow is transmitted on a corresponding DRB.

A packet data convergence protocol (packet data convergence protocol, PDCP) layer is a protocol layer in a communications system, and may perform a service such as security, header compression, or encryption. There may be a plurality of PDCP entities at the PDCP layer, and each entity carries data of one radio bearer (radio barrier, RB). The PDCP layer can be configured to ensure that data submitted to an upper layer is in order, that is, data is submitted in order.

A radio link control (radio link control, RLC) layer is a protocol layer in a communications system, and performs a service such as segmentation, reassembling, or retransmission. There may be a plurality of RLC entities at the RLC layer, and each RLC entity provides a service for each PDCP entity. The RLC layer can also be configured to ensure that data submitted to an upper layer is in order.

A media access control (media access control, MAC) layer is a protocol layer in a communications system, provides a data transmission service for a service on a logical channel, and performs a service such as scheduling or hybrid automatic repeat request (hybrid automatic repeat request, HARQ) acknowledgement and negative acknowledgement.

A physical (physical, PHY) layer performs coding and transmission on data delivered from the MAC layer.

Service data unit (service data unit, SDU) and protocol data unit (protocol data unit, PDU): For a user plane, protocol layers are respectively an SDAP layer, a PDCP layer, an RLC layer, a MAC layer, and a PHY layer from top to bottom. Alternatively, the protocol layers may not include the SDAP layer. For a control plane, protocol layers are respectively an RRC layer, a PDCP layer, an RLC layer, a MAC layer, and a PHY layer from top to bottom. For each layer, data input from an upper layer is referred to as a SDU of this layer. Data obtained after processing at each layer is referred to as a PDU at this layer. For example, data input by a PDCP layer to an RLC layer is referred to as a PDCP PDU for the PDCP layer, and is referred to as an RLC SDU for the RLC layer. In all embodiments of the present invention, a data unit may refer to any one of a PDU or an SDU.

In a possible manner, an access network device may have an architecture in which a centralized unit (centralized unit, CU) entity and a distributed unit (distributed unit, DU) entity are separated. For example, FIG. 1-2 is a schematic diagram of a protocol stack of an access network device having an architecture in which a CU entity and a DU entity are separated according to an embodiment of this application. The CU and the DU may be understood as division of the access network device from a perspective of logical functions. The CU entity is an entity corresponding to a CU function, and the DU entity is an entity corresponding to a DU function. The CU entity and the DU entity may be physically separated, or may be deployed together. A plurality of DU entities may share one CU entity. One DU entity may also be connected to a plurality of CU entities (not shown in FIG. 1-2). The CU entity and the DU entity may be connected through an interface, for example, an F1 interface. The CU entity and the DU entity may be divided based on protocol layers of a wireless network. For example, functions of an RRC protocol layer, an SDAP protocol layer, and a PDCP protocol layer are set in the CU entity, and functions of an RLC protocol layer, a MAC protocol layer, a PHY protocol layer, and the like are set in the DU entity. It may be understood that, division into processing functions of the CU entity and the DU entity based on the protocol layers is merely an example, and the processing functions of the CU entity and the DU entity may alternatively be divided in another manner. For example, the CU entity or the DU entity may be divided to have functions of more protocol layers. For example, the CU entity or the DU entity may alternatively be divided to have some processing functions of the protocol layers. In a possible design, some functions of the RLC protocol layer and a function of a protocol layer above the RLC protocol layer are set in the CU entity, and a remaining function of the RLC protocol layer and a function of a protocol layer below the RLC protocol layer are set in the DU entity. In another possible design, functions of the CU entity or the DU entity may alternatively be divided based on a service type or another system requirement. For example, division is performed based on a delay. Functions whose processing time needs to satisfy a delay requirement are set in the DU entity, and functions that do not need to satisfy the delay requirement are set in the CU entity. In another possible design, the CU entity may alternatively have one or more functions of a core network. One or more CU entities may be disposed together, or may be disposed separately. For example, the CU entities may be disposed on a network side for centralized management. The DU entity may have a plurality of radio frequency functions, and the radio frequency functions may be remotely set.

Functions of the CU entity may be implemented by one function entity, or may be implemented by different function entities. For example, the functions of the CU entity may be further divided. For example, a control plane (control plane, CP) and a user plane (user plane, UP) are separated. To be specific, the CU entity includes a CU control plane (CU-CP) entity and a CU user plane (CU-UP) entity, and the CU-CP entity and the CU-UP entity may be coupled to the DU entity, to jointly implement a function of the access network device. In a possible manner, the CU-CP entity is responsible for a control plane function, and mainly includes an RRC protocol layer and a PDCP control plane (PDCP control plane, PDCP-C) protocol layer. The PDCP-C protocol layer is mainly responsible for data encryption and decryption, integrity protection, data transmission, and the like on the control plane. The CU-UP entity is responsible for a user plane function, and mainly includes an SDAP protocol layer and a PDCP user plane (PDCP user plane, PDCP-U) protocol layer. The SDAP protocol layer is mainly responsible for mapping a data flow (flow) of the core network to a bearer. The PDCP-U protocol layer is mainly responsible for encryption and decryption, integrity protection, header compression, sequence number maintenance, data transmission, and the like on a data plane. In this embodiment of this application, the CU-CP entity is connected to the CU-UP entity through an E1 interface, the CU-CP entity is connected to the DU entity through an F1-C (control plane) interface, and the CU-UP entity is connected to the DU entity through an F1-U (user plane) interface. In addition, the CU-CP entity represents the access network device and a core network control plane (for example, a mobility management entity (mobility management entity, MME) of a 4th generation (4th generation, 4G) core network, or an access and mobility management function (access and mobility management function, AMF) network element of a 5G core network (5G core, 5GC)) that are connected. The CU-UP entity represents the access network device and the core network user plane (for example, a serving gateway (serving gateway, SGW) of a 4G core network, or a user plane function (user plane function, UPF) network element of a 5G core network) that are connected. The DU entity represents the access network device and the terminal device that are connected. Certainly, there is another possible implementation in which the PDCP-C is also in the CU-UP entity. This is not specifically limited in this embodiment of this application.

This application provides a communications method and apparatus. In a handover transmission process, information about a first time is information about a time that uses timing of a source network device as a reference, and a transmit end device converts the information about the time into information about a time that uses timing of a target network device as a reference. Therefore, a receive end device may use timing of a current serving cell in a unified manner. This reduces processing complexity of the receive end device.

In a handover scenario (To be specific, UE is handed over from the source network device to the target network device), the source network device needs to transfer, to the target network device, a downlink data unit that is received from a core network and that has not been correctly received by the UE and an out-of-order data unit that is received from the UE. Out-of-order means that some data units before a data unit correctly received by the source network device from a terminal are not correctly received by a source network device (For example, a packet 2/3 is received, but a packet 1 is not yet received). For a PDU session (session), there are two types of handover: lossy handover and lossless handover.
(1) For quality of service (quality of service, QoS) flows (flow) that do not require lossless handover, for example, QoS flows carried on a data radio bearer (data radio bearer, DRB) in an unacknowledged mode (Unacknowledged Mode, UM), the source network device transfers a downlink data unit of these QoS flows to the target network device through a PDU session-level tunnel. The data units transferred through the PDU session-level tunnel are transferred in an SDAP SDU form (to be specific, no SDAP layer header is carried).
(2) For QoS flows that require lossless handover (for example, QoS flows carried on DRBs in an acknowledged mode (Acknowledged Mode, AM)), the source network device transfers, to the target network device through a DRB-level downlink tunnel, downlink data units that have not been correctly received by the UE on these DRBs. To be specific, each DRB that requires lossless handover and that is of the source network device establishes a corresponding tunnel. The source network device transfers, to the target network device through a DRB-level uplink tunnel, out-of-order data units received on these DRBs. In addition, to perform submission in order, the source network device further needs to notify the target network device of a sequence number (Sequence Number, SN) status and a mapping relationship that is between a QoS flow and a DRB and that is configured by the source network device for the UE in each DRB. The SN status includes statuses of receiving an uplink PDCP SN and a hyper frame number (Hyper Frame Number, HFN) and statuses of sending a downlink PDCP SN and the HFN, and is specifically a next count count value allocated to a corresponding downlink data unit on a DRB. The count value includes a PDCP SN number and a hyper frame number of the corresponding data unit, and a status in which the source network device receives a corresponding uplink data unit on the DRB (a count count value corresponding to a first PDCP data unit that is not correctly received, where the count value includes a PDCP SN number and a hyper frame number of the corresponding data unit, and a status of uplink receiving of another data unit after the PDCP data unit). In this way, it can be ensured that PDCP SN numbers of downlink and uplink data units before and after handover are consecutive in a handover process, and it can be ensured that a receive end can submit corresponding data units in order. Data transferred through a DRB-level tunnel is transferred in an SDAP PDU form (to be specific, an SDAP layer header is carried).

In addition, all transferred data units are carried in a format of a GPRS tunneling protocol-user plane (GPRS Tunnelling protocol user plane, GTP-U), namely, a GTP-U protocol.

That the UE moves or is handed over may mean moving or handing over from the source network device to the target network device. The source network device and the target network device are two different network devices. Alternatively, that the UE moves or is handed over may mean moving or handing over from a cell (referred to as a "source cell") of a network device to another cell (referred to as a "target cell"). The source network device and the target network device may have different timing, and the source cell and the target cell may also have different timing. For example, the timing herein refers to a radio frame number, a subframe number, a timeslot number, a symbol number, or the like that corresponds to the source network device, the target network device, the source cell, or the target cell. The following embodiments are described by using an example in which movement or handover is performed from the source network device to the target network device. Actually, the movement or the handover can alternatively be replaced with movement or handover between the source cell and the target cell. Optionally, the source network device and the target network device may alternatively refer to a primary base station and a secondary base station in a dual connectivity scenario. A network side hands over some QoS flows between the primary base station and the secondary base station.

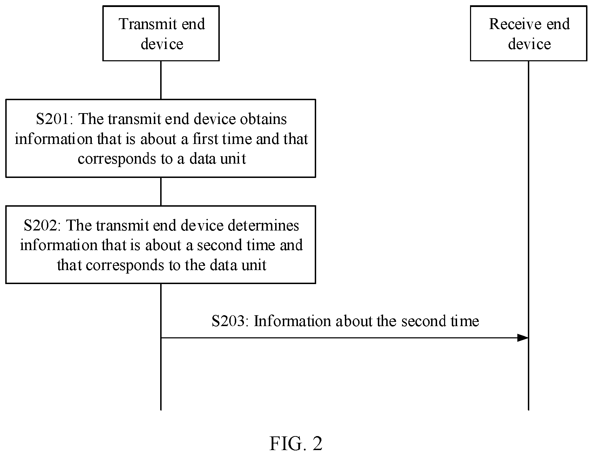

FIG. 2 is a schematic flowchart of a communications method according to an embodiment of this application. The method includes the following steps.

S201: A transmit end device obtains information that is about a first time and that corresponds to a data unit.

During downlink handover transmission, a source network device needs to transfer, to a target network device, a downlink data unit that is received from a core network and that is not correctly received by UE and an out-of-order data unit that is received from the UE. Alternatively, new downlink data (for example, downlink data to which no PDCP SN number is allocated) received from the core network may need to be transferred to the target network device. The transmit end device may be a target network device, and a corresponding receive end device may be a terminal device. In a process in which the terminal device sends a data unit, for example, retransmits data to the target network device, the transmit end device may be a terminal device, and the corresponding receive end device may be a target network device.

The transmit end device first obtains the information that is about the first time and that corresponds to the data unit, where the first time uses timing of the source network device as a reference.

In an implementation, in a downlink handover transmission process, the transmit end device is the target network device, and that a transmit end device obtains information that is about a first time and that corresponds to a data unit includes: The transmit end device receives, from the source network device, the information that is about the first time and that corresponds to the data unit. Specifically, the information about the first time may be carried in the data unit, or may be carried in a GTP-U header or extension header.

Optionally, the source network device sends, to the target network device, a data unit transferred during handover, and sends information that is about a first time and that corresponds to the data unit. The first time uses the timing of the source network device as a reference.

In a downlink data transmission process, if the UE moves from the source network device to the target network device, the source network device needs to transfer, to the target network device, downlink data that is received from the core network and that is not correctly received by the UE. Alternatively, the new downlink data (for example, the downlink data to which no PDCP SN number is allocated) received from the core network may need to be transferred to the target network device. In this embodiment, when sending, to the target network device, a data unit transferred during handover, the source network device also sends information about a first time. The first time is a moment at which the source network device receives data in the data unit from the core network or a moment at which the source network device generates the data unit, and the first time uses the timing of the source network device as a reference. Optionally, the first time may be any moment between a moment at which the source network device receives, from the core network, a data packet corresponding to the data unit and the moment at which the source network device generates the data unit.

In another possible implementation, that a transmit end device obtains information that is about a first time and that corresponds to a data unit includes: The transmit end device obtains, from a PDCP layer, the information that is about the first time and that corresponds to the data unit. In a specific implementation, the PDCP layer of the transmit end device obtains the data unit from the source network device, and the first time is a time corresponding to the data unit obtained from the PDCP layer by another protocol stack layer of the transmit end device in a subsequent processing process. Alternatively, that a transmit end device obtains information that is about a first time and that corresponds to a data unit includes: The transmit end device obtains, from an SDAP layer, the information that is about the first time and that corresponds to the data unit. In a specific implementation, the SDAP layer of the transmit end device obtains the data unit from the source network device, and the first time is a time corresponding to the data unit obtained from the SDAP layer by another protocol stack layer of the transmit end device in a subsequent processing process.

In still another implementation, in the process in which the terminal device sends the data unit, the transmit end device is the terminal device, and that a transmit end device obtains information that is about a first time and that corresponds to a data unit includes: The transmit end device obtains the information that is about the first time and that corresponds to the data unit sent by using the source network device. Specifically, the UE records a moment at which the data unit is sent to the source network device, a moment at which a radio protocol layer (for example, an SDAP layer or a PDCP layer) of the UE receives the data unit from an upper layer (for example, an application layer or an IP layer), a moment at which a radio protocol layer (for example, an SDAP layer or a PDCP layer) of the UE sends the data unit to a next layer, or any moment, namely, the first time, between a moment at which a radio protocol layer (for example, an SDAP layer or a PDCP layer) of the UE receives the data unit from an upper layer (for example, an application layer or an IP layer) and a moment at which a radio protocol layer (for example, an SDAP layer or a PDCP layer) of the UE sends the data unit to a next layer. The first time uses the timing of the source network device as a reference.

In still another implementation, that a transmit end device obtains information that is about a first time and that corresponds to a data unit includes: The transmit end device obtains, from the PDCP layer, the information that is about the first time and that corresponds to the data unit. In other words, the first time may alternatively be a moment at which a protocol layer of the terminal device receives the data packet from an upper layer, for example, an SDAP layer or a PDCP layer receives the data packet from an application layer, or a moment at which a PDCP layer receives the data packet from an SDAP layer. Alternatively, the first time is any moment between a moment at which a protocol layer of the terminal device receives the data packet from an upper layer and a moment at which the protocol layer sends the data packet to a lower layer.

Optionally, the information about the first time may be in a form of a relative time. For example, the information about the first time may be identified in at least one form of a frame number, a subframe number, and a timeslot number, or may be a time offset relative to a reference moment (for example, a time offset relative to a frame number, a subframe number, or a timeslot number). For example, the source network device notifies, by using an RRC message or a broadcast message, the UE of a rule corresponding to a reference moment, or a protocol specifies the rule. For example, a frame number, a subframe number, or a timeslot number of the reference moment meets a specific rule. For example, a modulo 10 operation is performed on the frame number, and a result is 0. Alternatively, the reference time may be an absolute time corresponding to a frame (for example, an absolute time delivered by a broadcast message, where the absolute time may be a coordinated universal time (coordinated universal time, UTC) or a GPS time). Before handover, the source network device and the UE may also measure, according to these rules, a delay corresponding to a data unit that is not transferred from the source network device to the target network device.

S202: The transmit end device determines information that is about a second time and that corresponds to the data unit.

The transmit end device determines the information that is about the second time and that corresponds to the data unit, where the second time uses timing of the target network device as a reference.

Optionally, the second time is determined based on the first time and a timing offset, and the timing offset includes a timing offset between the target network device and the source network device.

After the receive end device obtains the information about the first time, because wireless timing of different network devices is independent, there is a timing offset between the different network devices. The timing offset is an offset of a radio frame number between different network devices and an offset of a radio frame boundary between the different network devices. Optionally, the offset may be a timing offset observed from a perspective of the UE. Therefore, the receive end device determines the information about the second time based on the information about the first time and the timing offset. After receiving a data unit transferred by the source network device, the transmit end device needs to perform next processing on the data unit, to be specific, transmit the data unit to the receive end device, to ensure that the receive end device may use timing of a current serving cell in a unified manner. This reduces processing complexity of the receive end device. In this case, the second time uses the timing of the target network device as a reference. For example, in the downlink handover transmission process, after receiving the data unit transferred from the source network device, the target network device transmits the data unit to the UE, and sends the information about the second time to the UE at the same time. For another example, in a process in which the UE sends the data unit, the UE fails to send the data unit to the source network device. In addition, cell handover occurs on the UE, and the UE needs to retransmit the data unit to the target network device. Alternatively, in a process in which the UE sends the data unit, if the UE has not yet sent the data unit to the source network device but has allocated a PDCP SN number to the data unit (or a PDCP PDU has been formed), the UE needs to re-form the PDCP PDU based on a format of the target network device and send the data unit. To accurately calculate a delay in which the UE transmits the data unit, the UE determines the information about the second time based on the information about the first time and the timing offset. The second time uses the timing of the target network device as a reference.

S203: The transmit end device sends the information about the second time to the receive end device.

After determining the information about the second time, the transmit end device sends the information about the second time to the receive end device. The receive end device receives the information about the second time. Therefore, the receive end device may perform subsequent processing by using, in the unified manner, the timing of the current serving cell. This reduces processing complexity of the receive end device.

The transmit end device sends, to the receive end device, the received data unit transferred from the source network device, and sends the information that is about the second time and that corresponds to the data unit. The second time uses the timing of the target network device as a reference. In this way, a time consumed in a data unit transfer process is considered in the corresponding second time.

Optionally, the transmit end device may send the data unit to the receive end device at a radio protocol layer (for example, the SDAP layer or the PDCP layer). Specifically, the transmit end device may send the information about the second time to the receive end device in an SDAP PDU or a PDCP PDU. Further, in the downlink handover transmission process, the transmit end device is the target network device, and the receive end device is the terminal device. The foregoing method may further include: The transmit end device receives information about a delay from the receive end device, where the information about the delay is obtained by the receive end device through calculation based on the information about the second time and information about a third time at which the receive end device obtains the data unit.

For example, when the transmit end device is the target network device, the UE receives the data unit from the target network device. The UE may calculate, based on the information that is about the second time and that corresponds to the data unit and the information about the third time at which the UE obtains the data unit, a delay consumed by the data unit during wireless transmission.

Optionally, the third time of the data unit may be any moment from a moment at which the terminal device receives the data unit at a radio protocol layer (for example, the SDAP layer or the PDCP layer) to a moment at which the terminal device submits the data unit to an upper layer (for example, an IP layer).

The terminal device sends the information about the delay to the target network device. The target network device receives the information about the delay, and may learn of the information about the delay corresponding to transmission of the data unit on a wireless network side. The terminal device may feed back information about a delay of a data unit, or may feed back information about delays corresponding to a plurality of data units.

Further, in the process in which the UE sends the unit, the target network device may determine the delay of the data unit based on the information about the second time and the third time at which the target network device obtains the data unit.

After successfully receiving and decoding the data unit transmitted by the UE, the target network device may calculate the delay of the data unit based on the information about the second time and the third time at which the target network device obtains the data unit. The delay is a difference between the third time and the second time.

Optionally, the third time may be any moment from a moment at which the target network device successfully receives the data unit to a moment at which the target network device sends data in the data unit to the core network.

According to the communications method provided in this embodiment of this application, in the handover transmission process, the information about the first time is the information about the time that uses the timing of the source network device as the reference, and the transmit end device converts the information about the time into the information about the time that uses the timing of the target network device as a reference. Therefore, the receive end device may use the timing of the current serving cell in the unified manner. This reduces processing complexity of the receive end device.

In a specific implementation, downlink handover transmission is used as an example. The target network device serves as the transmit end device, and the target network device determines the information about the second time. The following plurality of implementations such as implementations A1 to A16 are included.

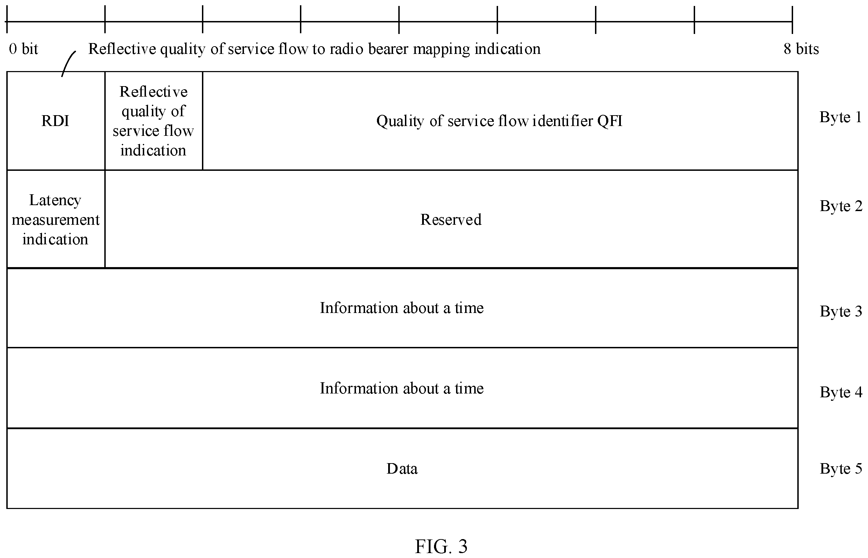

Implementation A1: The source network device transfers a to-be-handed-over data unit to the target network device in an SDAP PDU/PDCP SDU form. The source network device enables a header of an SDAP PDU to carry information about a relative time (the information about the first time), and the target network device obtains the information about the second time based on the information about the first time and the timing offset. The target network device enables a header of an SDAP PDU sent to the UE to carry the information about the second time. FIG. 3 is a schematic diagram of a packet format in which the header of the SDAP PDU carries information about a time. A latency measurement indication (latency measurement indication, LMI) may be used to indicate whether the SDAP PDU carries the information about the time, and the information about the time (time stamp) is located in a third byte (Oct3) and a fourth byte (Oct4) of the SDAP PDU. Data is located in a fifth byte and several bytes after the fifth byte. Optionally, the LMI may not be included. Certainly, this is merely an example herein, and the information about the time may alternatively be located in another byte of the SDAP PDU. A header a reflective quality of service flow to radio bearer mapping indication (reflective QoS flow to DRB mapping indication, RDI), a reflective quality of service flow indication (reflective QoS indication, RQI), and a quality of service flow identifier (QoS flow ID, QFI) are added to an SDAP SDU, to obtain the SDAP PDU. For the format in which the SDAP PDU carries the information about the time, refer to FIG. 3.

Optionally, the relative time herein may be identified in at least one form of a frame number, a subframe number, and a timeslot number, or may be a time offset relative to a reference moment (for example, a time offset relative to a frame number, a subframe number, or a timeslot number).

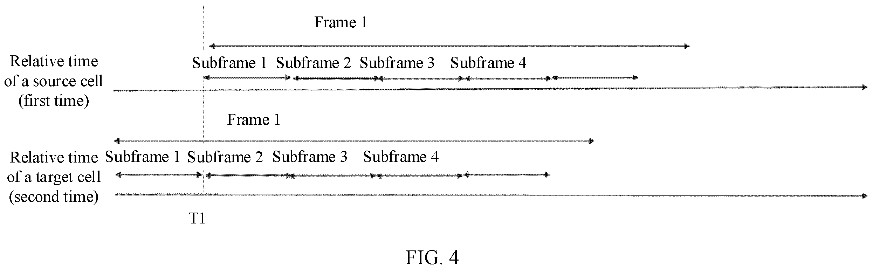

Specifically, the target network device determines the information about the second time in the following manner: The target network device determines the information about the second time based on the information that is about the first time and that is carried in the SDAP PDU by the source network device and the timing offset between the two network devices. For example, the timing offset between the source network device and the target network device is Diff = T_source - T_target. The information that is about the first time and that is carried in the SDAP PDU is correspondingly T_source by using the timing of the source network device as a reference. A corresponding moment is an absolute time T1. The absolute time T1 is correspondingly T_target by using the timing of the target network device as a reference. Therefore, the information that is about the time and that corresponds to the data unit sent by the target network device to the UE is a relative time corresponding to T_target that uses the timing of the target network device as a reference. For example, FIG. 4 is an example of a schematic diagram of determining information about a time. The information that is about the time of the SDAP PDU and that is transferred by the source network device is represented by using a frame number and a subframe number (this is merely used as an example herein, and a timeslot number may be further included). For example, the frame number is a frame 1, the subframe number is a subframe 1, and a corresponding absolute time is T1. A relative time of the same absolute time in the target network device is a frame 1 and a subframe 2. Therefore, a time form sent by the target network device to the UE is the frame 1 and the subframe 2. Optionally, the information that is about the time and that is sent by the target network device to the UE is in another form that can represent the second time. For example, only a low-order bit of a frame number corresponding to the frame 1 is used to indicate the frame 1. The low-order bit herein refers to a low-order bit in binary bits corresponding to the frame number (for example, if a frame number 20 corresponds to 10-bit binary 0000010100, the low-order bit is 10100), and may also be referred to as a least important bit of the frame number. Optionally, the absolute time in this application may be a GPS time, a coordinated universal time (coordinated universal time, UTC), or the like.

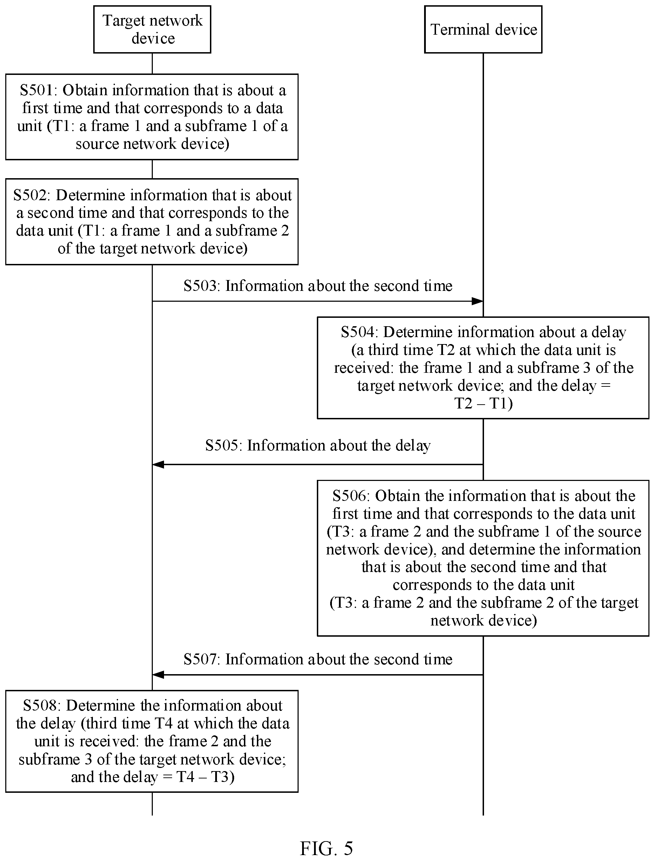

According to the foregoing implementation A1, specifically, FIG. 5 is an example of a schematic flowchart in which the transmit end device determines the information about the second time. The method includes the following steps.

S501: In the downlink handover transmission process, the target network device obtains the information that is about the first time and that corresponds to the data unit.

For example, a first time T1 uses the timing of the source network device as a reference, and is specifically the frame 1 and the subframe 1.

Specifically, the target network device may obtain the information about the first time from the source network device, or may obtain the information about the first time from an upper protocol layer.

Optionally, the target network device further receives the data unit from the source network device.

S502: The target network device determines the information that is about the second time and that corresponds to the data unit. The second time uses the timing of the target network device as a reference, and the second time is specifically the frame 1 and the subframe 2.

S503: The target network device sends the information about the second time to the terminal device.

Optionally, the target network device further sends the data unit to the terminal device.

S504: The terminal device determines the information about the delay based on the information about the second time and the information about the third time at which the data unit is received.

A third time T2 uses the timing of the target network device as a reference, and T2 is the frame 1 and a subframe 3.

The terminal device uses the timing of the target network device as a reference in the unified manner, and determines that the delay = T2 - T1. In other words, the delay = (frame 1, subframe 3) - (frame 1, subframe 2) = one subframe.

S505: The terminal device sends the information about the delay to the target network device.

S501 to S505 are downlink handover transmission processes, and may be independent of a following process in which the terminal device sends the data unit.

S506: In the process in which the terminal device sends the data unit, for example, in a process in which the terminal device retransmits the data unit to the target network device, the terminal device obtains the information that is about the first time and that corresponds to the data unit, and determines the information that is about the second time and that corresponds to the data unit.

For example, if a first time T3 at which the UE sends the data unit to the source network device uses the timing of the source network device as a reference, T3 is a frame 2 and the subframe 1. The UE determines, based on the information about the first time and the timing offset, that the first time T3 that uses the timing of the target network device as a reference is the frame 2 and the subframe 2.

S507: The terminal device sends the information about the second time to the target network device.

S508: The target network device determines the information about the delay based on the information about the second time and the information about the third time at which the data unit is received.

For example, a third time T4 at which the target network device receives the data unit uses the timing of the target network device as a reference, and T4 is the frame 2 and the subframe 3. In this case, delay = T4 - T3 = (frame 2, subframe 3) - (frame 2, subframe 4) = one subframe.

Lossless handover can be implemented by using the implementation A1. This implementation is specific to a scenario in which when the source network device and the target network device each send the data unit to the terminal device. The source network device enables the header of the SDAP PDU to carry the information about the first time, and the target network device enables the header of the SDAP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

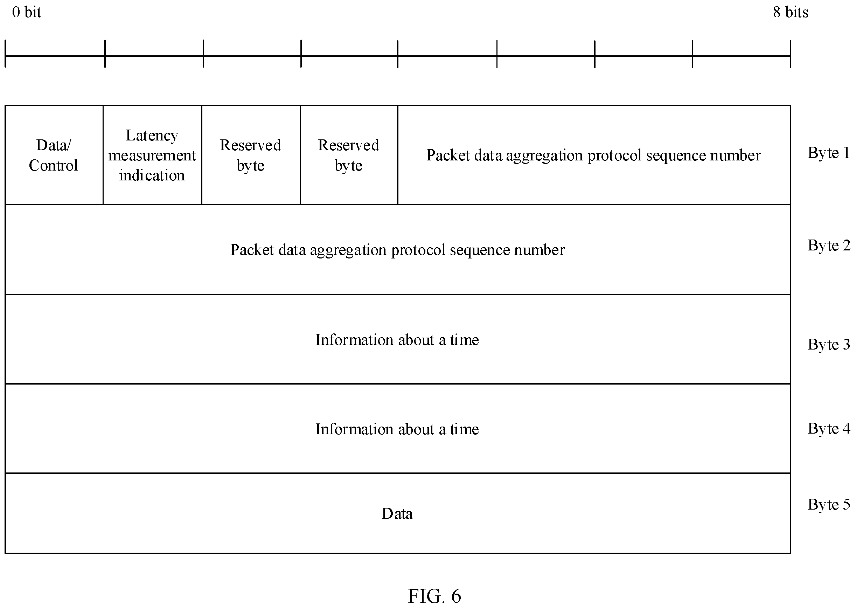

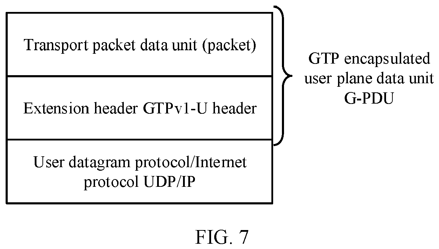

Implementation A2: The source network device transfers a to-be-handed-over data unit to the target network device in an SDAP PDU/PDCP SDU form. The source network device enables a GTP-U extension header to carry information about a relative time (the information about the first time), and the target network device enables a header of a PDCP PDU sent to the UE to carry the information about the second time. FIG. 6 is a schematic diagram of a packet format in which the header of the PDCP PDU carries information about a time. An LMI indicates whether the PDCP PDU carries the information about the time. The information about the time (time stamp) is located in a third byte and a fourth byte of the PDCP PDU. Certainly, the information about the time may alternatively be located in another byte. This is not limited herein. Data is located in a fifth byte and several bytes after the fifth byte. A GTP-U is a protocol for transmission between network devices. FIG. 7 is a schematic diagram of a GTP-U format. A transport packet data unit (transport packet data unit, T-PDU) is used to carry an SDAP PDU/PDCP SDU transferred during handover, and the T-PDU may alternatively be an internet protocol (internet protocol, IP) packet (datagram). A (GTPv1-U Header) carries the GTP-U extension header, and the extension header carries the information about the time. A user datagram protocol/internet protocol (user datagram protocol/internet protocol, UDP/IP) is a path protocol for transmitting a GTP-U message. A GTP encapsulated user plane data unit (GTP encapsulated user plane data unit, G-PDU) refers to user plane data content carried in a GTP protocol.

Optionally, the relative time herein may be identified in at least one form of a frame number, a subframe number, and a timeslot number, or may be a time offset relative to a reference moment (for example, a time offset relative to a frame number, a subframe number, or a timeslot number).

Specifically, the target network device determines the information about the second time in the following manner: The target network device determines the information about the second time based on the information that is about the time and that is carried in the GTP-U and a timing offset between two cells. For example, the timing offset between the source network device and the target network device is Diff = T_source - T_target. The information that is about the first time and that is carried in the GTP-U extension header is correspondingly T_source by using the timing of the source network device as a reference. A corresponding moment is an absolute time T1. The absolute time T1 is correspondingly T_target by using the timing of the target network device as a reference. Therefore, the information that is about the time and that corresponds to the data unit sent by the target network device to the UE is a relative time corresponding to T_target that uses the timing of the target network device as a reference. For example, the information that is about the time and that is in the GTP-U extension header is represented by using a frame number and a subframe number. For example, the frame number is a frame 1, the subframe number is a subframe 1, and a corresponding absolute time is T1. A relative time of the same moment in the target network device is a frame 1 and a subframe 2. Therefore, a time form sent by the target network device to the UE is the frame 1 and the subframe 2. Optionally, the information about the time sent by the target network device to the UE is in another form that can represent the second time. For example, only a low-order bit of a frame number corresponding to the frame 1 is used to indicate the frame 1.

Lossless handover can be implemented by using the implementation A2. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A3: The source network device transfers a to-be-handed-over data unit to the target network device in an SDAP PDU/PDCP SDU form. The source network device enables a GTP-U extension header to carry information about an absolute time (an absolute time corresponding to the information about the first time), and the target network device enables a header of an SDAP PDU sent to the UE to carry the information about the second time. Optionally, the information that is about the absolute time and that is carried in the GTP-U is a moment at which the source network device receives a data packet in the data unit, for example, a moment at which an SDAP layer of the source network device receives an SDAP SDU, or a moment at which a PDCP layer of the source network device receives a PDCP SDU.

Specifically, the target network device determines the information about the second time in the following manner: The target network device determines the information about the second time based on the absolute time in the GTP-U. For example, if the absolute time carried in the GTP-U is T_absolute, the target network device sets T_absolute to a relative time of the target network device based on a correspondence that is between the absolute time and the relative time and that is set by the target network device. For example, as shown in FIG. 4, if T_absolute is T1, the target network device learns that the relative time corresponding to the absolute time T1 in the target network device is a frame 1 and a subframe 2. In this way, the target network device learns that the relative time is set to the frame 1 and the subframe 2. Optionally, the information about the time sent by the target network device to the UE is in another form that can represent the second time. For example, only a low-order bit of a frame number corresponding to the frame 1 is used to indicate the frame 1.

Lossless handover can be implemented by using the implementation A3. This implementation is specific to a scenario in which when the source network device and the target network device each send the data unit to the terminal device. The source network device enables the GTP-U extension header to carry the information about the absolute time, and the target network device converts the information about the absolute time into a relative time that uses timing of the target network device as a reference. The target network device enables the header of the SDAP PDU sent to the UE to carry the information about the second time. Therefore, the terminal device may calculate, by using the timing of the current serving cell in the unified manner, a delay corresponding to the data unit. This reduces processing complexity of the terminal device.

Implementation A4: The source network device transfers a to-be-handed-over data unit to the target network device in an SDAP PDU/PDCP SDU form. The source network device enables a GTP-U extension header to carry information about an absolute time (an absolute time corresponding to the information about the first time), and the target network device enables a header of a PDCP PDU sent to the UE to carry the information about the second time. Optionally, the absolute time carried in the GTP-U is a moment at which the source network device receives the data unit, for example, a moment at which a PDCP layer of the source network device receives a PDCP SDU, or a moment at which an SDAP layer of the source network device receives an SDAP SDU.

Specifically, the target network device determines the information about the second time in the following manner: The target network device determines the information about the second time based on the absolute time in the GTP-U. For example, if the absolute time carried in the GTP-U is T_absolute, the target network device sets T_absolute to a relative time of the target network device based on a correspondence that is between the absolute time and the relative time and that is set by the target network device. For example, as shown in FIG. 4, if T_absolute is T1, the target network device learns that the relative time corresponding to the absolute time T1 in the target network device is a frame 1 and a subframe 2. In this way, the target network device learns that the relative time is set to the frame 1 and the subframe 2. Optionally, the information about the time sent by the target network device to the UE is in another form that can represent the second time. For example, only a low-order bit of a frame number corresponding to the frame 1 is used to indicate the frame 1.

Lossless handover can be implemented by using the implementation A4. This implementation is specific to a scenario in which when the source network device and the target network device each send the data unit to the terminal device. The source network device enables the GTP-U extension header to carry the information about the absolute time, and the target network device enables the header of the PDCP PDU sent to the UE to carry the information about the second time. The target network device converts the information about the absolute time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A5: The source network device transfers a to-be-handed-over data unit to the target network device in an SDAP PDU/PDCP SDU form. The source network device enables a header of an SDAP PDU to carry information about a relative time (the information about the first time), and the target network device enables a header of an SDAP PDU sent to the UE to carry the information about the second time.

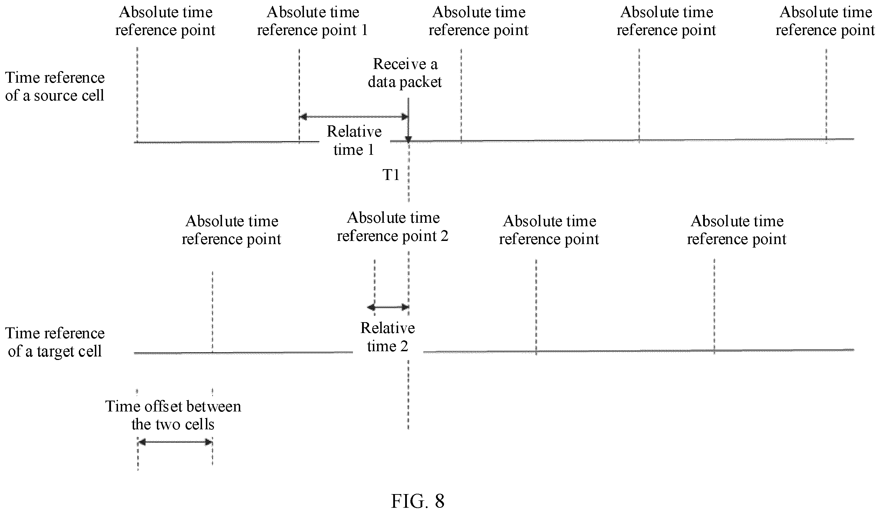

Specifically, the target network device determines the information about the second time in the following manner: The target network device determines the information about the second time based on the information that is about the time and that is carried in the SDAP PDU and a timing offset between two cells. For example, FIG. 8 is an example of another schematic diagram of determining information about a time. The timing offset between the source network device and the target network device is Diff = T_source - T_target. The information that is about the time and that is carried in the SDAP PDU corresponds to a moment T1, and an absolute time reference point corresponding to T1 is a reference point 1. A relative time is a relative time 1 (the information that is about the relative time and that is carried in the header of the SDAP PDU transferred by the source network device to the target network device, namely, the information about the first time). In this case, a moment carried in data sent by the target network device to the UE is T1 in absolute time, and the information about the time sent by the target network device to the UE is set based on the moment T1. For example, a time reference point is a time reference point 2, and the relative time is a relative time 2. For example, the target network device learns of information about the absolute time reference point sent by the source network device (to be specific, the target network device learns of a time domain location of the absolute time reference point of the source network device). For example, the time domain location is location information such as a frame number and a subframe number. In this way, the target network device learns of, based on the timing offset, a specific time reference point corresponding to the data unit, to learn of a corresponding absolute time T1. Then, the target network device obtains, based on the absolute time T1, an absolute time reference point 2 and a relative time 2 that correspond to the target network device. Then, the relative time 2 is carried in the header of the SDAP PDU sent to the UE.

In an example, a broadcast message is sent every 100 frames. An absolute time corresponding to a moment at which the broadcast message is delivered is delivered in the broadcast message, and a relative time carried in the data unit is a carried time offset relative to a previous broadcast message.

The target network device learns of a time point corresponding to an absolute time T1, and learns of a correspondence between the absolute time and a time reference point, to learn of a relative time. In an example, T1 is 15:23:11:11 on November 5, 2018. The target network device learns of a reference point of each absolute time of the target network device. For example, every 20 minutes is one reference point. A first time reference point is 15:23 on November 5, 2018, a second time reference point is 15:43 on November 5, 2018, .... In this way, the target network device learns that a time reference point at the moment T1 is the reference point 1, and a relative time is a difference between an absolute time corresponding to the reference point 1 and the T1. That is, the relative time is 11 seconds and 11 milliseconds.

Lossless handover can be implemented by using the implementation A5. This implementation is specific to a scenario in which when the source network device and the target network device each send the data unit to the terminal device. The source network device enables the header of the SDAP PDU to carry the information about the first time, and the target network device enables the header of the SDAP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A6: The source network device transfers a to-be-handed-over data unit to the target network device in an SDAP PDU/PDCP SDU form. The source network device enables a GTP-U extension header to carry information about a relative time (the information about the first time), and the target network device enables a header of a PDCP PDU sent to the UE to carry the information about the second time.

Specifically, the target network device determines the information about the second time in the following manner: The target network device determines the information about the second time based on the information that is about the relative time and that is carried in the GTP-U and a timing offset between two cells. For example, the timing offset between the source network device and the target network device is Diff = T_source - T_target. The information that is about the time and that is carried in the GTP-U extension header corresponds to a moment T1, and an absolute time reference point corresponding to T1 is a reference point 1. A relative time is a relative time 1 (the information that is about the relative time and that is carried in the GTP-U extension header transferred by the source network device to the target network device). In this case, a moment carried in data sent by the target network device to the UE is T1 in absolute time, and the information about the time sent by the target network device to the UE is set based on the moment T1. For example, a time reference point is a time reference point 2, and the relative time is a relative time 2. For example, the target network device learns of information about the absolute time reference point sent by the source network device (to be specific, the target network device learns of a time domain location of the absolute time reference point of the source network device). For example, the time domain location is location information of a frame number and a subframe number. In this way, the target network device learns of, based on the timing offset, a specific time reference point corresponding to the data unit, to learn of a corresponding absolute time T1. Then, the target network device obtains, based on the absolute time T1, an absolute time reference point 2 and a relative time 2 that correspond to the target network device. Then, the relative time 2 is carried in the header of the PDCP PDU sent to the UE.

Lossless handover can be implemented by using the implementation A6. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A7: The source network device transfers a to-be-handed-over data unit to the target network device by using an SDAP PDU/PDCP SDU. The source network device enables a GTP-U extension header to carry information about an absolute time and a relative time or information about an absolute time, and the target network device enables a header of the SDAP PDU sent to the UE to carry information about a modified time.

Specifically, the target network device determines the information about the second time in the following manner: The target network device sets, based on the absolute time carried in the GTP-U, the absolute time and the relative time (the second time) that are sent by the target network device to the UE. For example, if the absolute time carried in the GTP-U and an absolute time corresponding to the information about the relative time is T1 or the information that is about the absolute time and that is carried in the GTP-U is an absolute time T1, the target network device sets, based on the absolute time T1, the absolute time and the relative time that are sent to the UE. For example, if a time reference corresponding to the absolute time T1 in the target network device is an absolute time reference 2, and a relative time is a relative time 2, the information that is about the second time and that is sent by the target network device to the UE carries the relative time 2.

Lossless handover can be implemented by using the implementation A7. This implementation is specific to a scenario in which when the source network device and the target network device each send the data unit to the terminal device. The source network device enables the GTP-U extension header to carry the information about the first time, and the target network device enables the header of the SDAP PDU sent to the UE to carry the information about the second time. The information about the first time is the information about the absolute time and the information about the relative time, or the information about the absolute time. The target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A8: The source network device transfers a to-be-handed-over data unit to the target network device by using an SDAP PDU/PDCP SDU. The source network device enables a GTP-U extension header to carry information about an absolute time and a relative time or information about an absolute time, and the target network device enables a header of a PDCP PDU sent to the UE to carry the information about the second time.

Specifically, the target network device determines the information about the second time in the following manner: The target network device sets, based on the absolute time carried in the GTP-U, an absolute time and a relative time that are sent by the target network device to the UE. For example, if the absolute time carried in the GTP-U and an absolute time corresponding to the information about the relative time is T1 or the information that is about the absolute time and that is carried in the GTP-U is an absolute time T1, the target network device sets, based on the absolute time T1, the absolute time and the relative time that are sent to the UE. For example, a time reference corresponding to the absolute time T1 in the target network device is an absolute time reference 2, and the relative time is a relative time 2.

Lossless handover can be implemented by using the implementation A8. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the absolute time and the information about the relative time, or the information about the absolute time. The target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A9: The source network device transfers a to-be-handed-over data unit to the target network device in an SDAP SDU form. The source network device enables a GTP-U extension header to carry information about a relative time (the information about the first time), and the target network device enables a header of an SDAP PDU sent to the UE to carry the information about the second time. Optionally, the information that is about the time and that is carried in the GTP-U is information about a time at which the source network device receives the data unit, and is specifically a moment at which an SDAP layer of the source network device receives the SDAP SDU.

The target network device determines the information about the second time in the following manner: The target network device determines the information about the second time based on the information that is about the first time and that is carried in the SDAP PDU and a timing offset between two cells/the two network devices. For example, the timing offset between the source network device and the target network device is Diff = T_source - T_target. The information that is about the first time and that is carried in the SDAP PDU is correspondingly T_source by using the timing of the source network device as a reference, and a corresponding moment is an absolute time T1. The absolute time T1 is correspondingly T_target by using the timing of the target network device as a reference. Therefore, the information that is about the time and that corresponds to the data unit sent by the target network device to the UE is a relative time corresponding to T_target that uses the timing of the target network device as a reference. For example, FIG. 4 is an example of a schematic diagram of determining information about a time. The information about the time of the SDAP PDU transferred by the source network device is represented by using a frame number and a subframe number. For example, the frame number is a frame 1, the subframe number is a subframe 1, and a corresponding absolute time is T1. A relative time of the same moment in the target network device is a frame 1 and a subframe 2. Therefore, a time form sent by the target network device to the UE is the frame 1 and the subframe 2.

Lossy handover can be implemented by using the implementation A9. This implementation is specific to a scenario in which when the source network device and the target network device each send the data unit to the terminal device. The source network device enables the GTP-U extension header to carry the information about the first time, and the target network device enables the header of the SDAP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A10: The source network device transfers a to-be-handed-over data unit to the target network device in an SDAP SDU form. The source network device enables a GTP-U extension header to carry information about a relative time (the information about the first time), and the target network device enables a header of a PDCP PDU sent to the UE to carry the information about the second time. Optionally, the information that is about the time and that is carried in the GTP-U is information about a time at which the source network device receives the data unit, and is specifically a moment at which an SDAP layer of the source network device receives an SDAP SDU, or a moment at which a PDCP layer of the source network device receives a PDCP SDU.

The target network device determines the information about the second time in the following manner: The target network device determines the information about the second time based on the information that is about the time and that is carried in the GTP-U and a timing offset between two cells. For example, the timing offset between the source network device and the target network device is Diff = T_source - T_target. The information that is about the first time and that is carried in the SDAP PDU is correspondingly T_source by using the timing of the source network device as a reference, and a corresponding moment is an absolute time T1. The absolute time T1 is correspondingly T_target by using the timing of the target network device as a reference. Therefore, the information that is about the time and that corresponds to the data unit sent by the target network device to the UE is a relative time corresponding to T_target that uses the timing of the target network device as a reference. For example, FIG. 4 is an example of a schematic diagram of determining information about a time. The information about the time of the SDAP PDU transferred by the source network device is represented by using a frame number and a subframe number. For example, the frame number is a frame 1, the subframe number is a subframe 1, and a corresponding absolute time is T1. A relative time of the same moment in the target network device is a frame 1 and a subframe 2. Therefore, a time form sent by the target network device to the UE is the frame 1 and the subframe 2.

Lossy handover can be implemented by using the implementation A10. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A11: The source network device transfers a to-be-handed-over data unit to the target network device in an SDAP SDU form. The source network device enables a GTP-U extension header to carry information about an absolute time (an absolute time corresponding to the first time), and the target network device enables a header of an SDAP PDU sent to the UE to carry the information about the second time. Optionally, the information that is about the absolute time and that is carried in the GTP-U is a moment at which the source network device receives the data unit, and is specifically a moment at which an SDAP layer of the source network device receives an SDAP SDU.

The target network device determines the information about the second time in the following manner: The target network device determines the information about the second time based on the absolute time in the GTP-U. For example, if the absolute time carried in the GTP-U is T_absolute, the target network device sets T_absolute to a relative time of the target network device based on a correspondence that is between the absolute time and the relative time and that is set by the target network device. For example, as shown in FIG. 5, if T_absolute is T1, the target network device learns that the relative time corresponding to the absolute time T1 in the target network device is a frame 1 and a subframe 2. In this way, the target network device learns that the relative time is set to the frame 1 and the subframe 2.

Lossy handover can be implemented by using the implementation A11. This implementation is specific to a scenario in which when the source network device and the target network device each send the data unit to the terminal device. The source network device enables the GTP-U extension header to carry the information about the first time, and the target network device enables the header of the SDAP PDU sent to the UE to carry the information about the second time. The information about the first time is the information about the absolute time, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A12: The source network device transfers a to-be-handed-over data unit to the target network device in an SDAP SDU form. The source network device enables a GTP-U extension header to carry information about an absolute time (an absolute time corresponding to the first time), and the target network device enables a header of a PDCP PDU sent to the UE to carry the information about the second time. Optionally, the absolute time carried in the GTP-U is a moment at which the source network device receives the data unit, and is specifically a moment at which an SDAP layer of the source network device receives an SDAP SDU or a moment at which a PDCP layer of the source network device receives a PDCP SDU.

The target network device determines the information about the second time in the following manner: The target network device modifies the information about the second time based on the absolute time in the GTP-U. For example, if the absolute time carried in the GTP-U is T_absolute, the target network device sets T_absolute to a relative time of the target network device based on a correspondence that is between the absolute time and the relative time and that is set by the target network device. For example, as shown in FIG. 4, if T_absolute is T1, the target network device learns that the relative time corresponding to the absolute time T1 in the target network device is a frame 1 and a subframe 2. In this way, the target network device learns that the relative time is set to the frame 1 and the subframe 2.

Lossy handover can be implemented by using the implementation A12. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the absolute time, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A13: The source network device transfers a to-be-handed-over data unit to the target network device in an SDAP SDU form. The source network device enables a GTP-U extension header to carry information about a relative time (the information about the first time), and the target network device enables a header of an SDAP PDU sent to the UE to carry the information about the second time. Optionally, the information that is about the time and that is carried in the GTP-U is information about a time at which the source network device receives a data packet, and is specifically a moment at which an SDAP layer of the source network device receives the SDAP SDU.

The target network device determines the information about the second time in the following manner: The target network device determines the information about the second time based on the information that is about the time and that is carried in the GTP-U and a timing offset between two cells. For example, FIG. 8 is an example of another schematic diagram of determining information about a time. The timing offset between the source network device and the target network device is Diff = T_source - T_target. The information that is about the time and that is carried in the GTP-U corresponds to a moment T1, and an absolute time reference point corresponding to T1 is a reference point 1. A relative time is a relative time 1 (the information that is about the relative time and that is carried in the GTP-U header transferred by the source network device to the target network device, namely, information about the first time). In this case, a moment carried in data sent by the target network device to the UE is T1 in absolute time, and the information about the time sent by the target network device to the UE is set based on the moment T1. For example, a time reference point is a time reference point 2, and the relative time is a relative time 2. For example, the target network device learns of information about the absolute time reference point sent by the source network device (to be specific, the target network device learns of a time domain location of the absolute time reference point of the source network device). For example, the time domain location is location information of a frame number and a subframe number. In this way, the target network device learns of, based on the timing offset, a specific time reference point corresponding to the data unit, to learn of a corresponding absolute time T1. Then, the target network device obtains, based on the absolute time T1, an absolute time reference point 2 and a relative time 2 that correspond to the target network device. Then, the relative time 2 is carried in the header of the SDAP PDU sent to the UE.

Lossy handover may be implemented by using the implementation A13. This implementation is specific to a scenario in which when the source network device and the target network device each send the data unit to the terminal device. The source network device enables the GTP-U extension header to carry the information about the first time, and the target network device enables the header of the SDAP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A14: The source network device transfers a to-be-handed-over data unit to the target network device by using an SDAP SDU. The source network device enables a GTP-U extension header to carry information about a relative time (the information about the first time), and the target network device enables a header of a PDCP PDU sent to the UE to carry the information about the second time.

The target network device determines the information about the second time in the following manner: The target network device determines the information about the second time based on the information that is about the relative time and that is carried in the GTP-U and a timing offset between two cells. For example, the timing offset between the source network device and the target network device is Diff = T_source - T_target (the timing offset herein is an absolute time offset). The information that is about the time and that is carried in the GTP-U extension header corresponds to a moment T1, and an absolute time reference point corresponding to T1 is a reference point 1. A relative time is a relative time 1 (the information that is about the relative time and that is carried in the GTP-U extension header transferred by the source network device to the target network device). In this case, a moment carried in data sent by the target network device to the UE is T1 in absolute time, and the information about the time sent by the target network device to the UE is set based on the moment T1. For example, a time reference point is a time reference point 2, and the relative time is a relative time 2. For example, the target network device learns of information about the absolute time reference point sent by the source network device (to be specific, the target network device learns of a time domain location of the absolute time reference point of the source network device). For example, the time domain location is location information of a frame number and a subframe number. In this way, the target network device learns of, based on the timing offset, a specific time reference point corresponding to the data unit, to learn of a corresponding absolute time T1. Then, the target network device obtains, based on the absolute time T1, an absolute time reference point 2 and a relative time 2 that correspond to the target network device. Then, the relative time 2 is carried in the header of the PDCP PDU sent to the UE.

Lossy handover may be implemented by using the implementation A14. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the relative time that uses the timing of the source network device as a reference, and the target network device converts the information about the first time into a relative time that uses the timing of the target network device as a reference. Therefore, the terminal device may calculate, by using the timing of the current serving cell in the unified manner, a delay corresponding to the data unit. This reduces processing complexity of the terminal device.

Implementation A15: The source network device transfers a to-be-handed-over data unit to the target network device in an SDAP SDU form. The source network device enables a GTP-U extension header to carry information about an absolute time and a relative time or information about an absolute time, and the target network device enables a header of an SDAP PDU sent to the UE to carry information about a modified time.

The target network device determines the information about the second time in the following manner: The target network device sets, based on the absolute time (the first time) carried in the GTP-U, an absolute time and a relative time (the second time) that are sent by the target network device to the UE. For example, if the absolute time carried in the GTP-U is T1, the target network device sets, based on the absolute time T1, the absolute time and the relative time that are sent to the UE. For example, a time reference corresponding to the absolute time T1 in the target network device is an absolute time reference 2, and the relative time is a relative time 2.

Lossy handover can be implemented by using the implementation A16. This implementation is specific to a scenario in which when the source network device and the target network device each send the data unit to the terminal device. The source network device enables the GTP-U extension header to carry the information about the first time, and the target network device enables the header of the SDAP PDU sent to the UE to carry the information about the second time. The information about the first time is the information about the absolute time and the information about the relative time, or the information about the absolute time. The target network device converts the information about the first time into an absolute time and a relative time that uses the timing of the target network device as a reference. Therefore, the terminal device may calculate, by using the timing of the current serving cell in the unified manner, a delay corresponding to the data unit. This reduces processing complexity of the terminal device.

Implementation A16: The source network device transfers a to-be-handed-over data unit to the target network device in an SDAP SDU form. The source network device enables a GTP-U extension header to carry information about an absolute time and a relative time or information about an absolute time, and the target network device enables a header of a PDCP PDU sent to the UE to carry the information about the second time.

The target network device determines the information about the second time in the following manner: The target network device sets, based on the absolute time carried in the GTP-U, an absolute time and a relative time that are sent by the target network device to the UE. For example, if the absolute time carried in the GTP-U is T1, the target network device sets, based on the absolute time T1, the absolute time and the relative time that are sent to the UE. For example, a time reference corresponding to the absolute time T1 in the target network device is an absolute time reference 2, and the relative time is a relative time 2.

Lossy handover can be implemented by using the implementation A16. This implementation is specific to a scenario in which when the source network device and the target network device each send the data unit to the terminal device. The source network device enables the GTP-U extension header to carry the information about the first time, and the target network device enables the header of the PDCP PDU sent to the UE to carry the information about the second time. The information about the first time is the information about the absolute time and the information about the relative time, or the information about the absolute time. The target network device converts the information about the first time into a relative time that uses the timing of the target network device as a reference and an absolute time. Therefore, the terminal device may calculate, by using the timing of the current serving cell in the unified manner, a delay corresponding to the data unit. This reduces processing complexity of the terminal device.

In a specific implementation, in the foregoing embodiment, the UE serves as the transmit end device, and the UE determines the information about the second time. When the UE sends, to the target network device, a data unit that is not correctly received by the source network device or a data unit whose information about a time has been set according to a format of the source network device, the UE considers waiting times of these data units on a UE side. For example, the information about the second time of the target network device is converted into by the UE based on the time offset between the source network device and the target network device and the information that is about the first time and that corresponds to the data unit. Specifically, the following two implementations A17 and A18 are included.

Implementation A17: The UE represents an original moment (the first time) in a form of a relative time (the second time) of the target network device based on the information that is about the first time and that corresponds to the data unit and the timing offset between the source network device and the target network device. The first time and the second time each are represented in the form of a relative time, for example, a frame number and a subframe number. For example, as shown in FIG. 4, information about an original time is that a frame number is a frame 1, a subframe number is a subframe 1, and a corresponding moment is T1. A relative time of the same moment in the target network device is a frame 1 and a subframe 2.

The implementation A17 is used. This implementation is specific to a scenario in which when the terminal device sends the data unit to each of the source network device and the target network device, and the terminal device sends the information about the second time to the target network device. The information about the first time is the information about the relative time that uses the timing of the source network device as a reference, and the terminal device converts the information about the first time into a relative time that uses the timing of the target network device as a reference. Therefore, the target network device may calculate, by using the timing of the current serving cell in the unified manner, a delay corresponding to the data unit. This reduces processing complexity of the target network device.

Implementation A18: The UE represents an original moment (the first time) in a form of a relative time (the second time) of the target network device based on the information that is about the first time and that corresponds to the data unit and the timing offset between the source network device and the target network device. The first time and the second time each are represented in a form of an absolute time and a relative time. For example, an absolute time corresponding to a frame is used as a reference point, and a relative time is a time offset relative to the frame. For example, as shown in FIG. 7, a reference point corresponding to the first time in the source network device is an absolute time at which a frame 1 is delivered, and a relative time in the first time is a time offset T2 relative to the frame 1. A reference point corresponding to a moment corresponding to the first time in the target network device is an absolute time at which a frame number 2 is delivered, and a relative time in the second time is a time offset T3 relative to the frame 1.

The implementation A18 is used. This implementation is specific to a scenario in which when the terminal device sends the data unit to each of the source network device and the target network device, and the terminal device sends the information about the second time to the target network device. The information about the first time is the information about the relative time that uses the timing of the source network device as a reference and the information about the absolute time. The terminal device converts the information about the first time into a relative time that uses the timing of the target network device as a reference and an absolute time. Therefore, the target network device may calculate, by using the timing of the current serving cell in the unified manner, a delay corresponding to the data unit. This reduces processing complexity of the target network device.

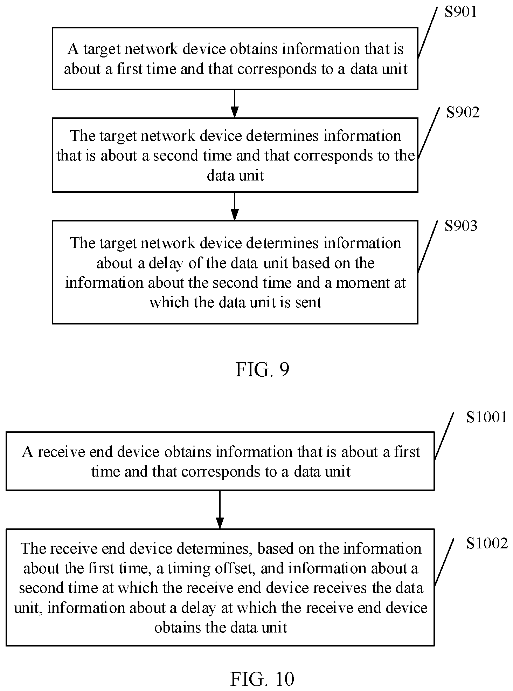

FIG. 9 is a schematic flowchart of another communications method according to an embodiment of this application. The method includes the following steps.

S901: A target network device obtains information that is about a first time and that corresponds to a data unit.

In an uplink transmission process, if cell handover occurs, a source network device needs to transfer an out-of-order data unit received from UE to the target network device. Out-of-order means that some data units before a data unit correctly received by the source network device from the UE are not correctly received by the source network device. For example, a packet 2 and a packet 3 are received, but a packet 1 is not received yet. In this case, the source network device sends the packet 2 and the packet 3 to the target network device.

In an implementation, the target network device may receive, from the source network device, the information that is about the first time and that corresponds to the data unit.

In another implementation, the target network device may alternatively obtain, from a PDCP layer, the information that is about the first time and that corresponds to the data unit.

Optionally, the source network device sends the received data unit to the target network device. The target network device receives the data unit, and obtains the information about the first time carried in the data unit. The first time indicates a first moment at which the source network device receives the data unit. The first time uses timing of the source network device as a reference.

Optionally, the source network device sends the received data unit to the target network device, and the source network device sends, to the target network device, the information that is about the first time and that corresponds to the data unit. The target network device receives the data unit, and obtains the information that is about the first time and that corresponds to the data unit. The first time indicates a first moment at which the source network device receives the data unit. The first time uses timing of the source network device as a reference, or the first time is an absolute time at which the source network device receives the data unit.

Optionally, the source network device sends the received data unit to the target network device, and the source network device sends, to the target network device, the information that is about the first time and that corresponds to the data unit. The target network device receives the data unit, and obtains the information that is about the first time and that corresponds to the data unit. The first time indicates a first moment at which the UE sends the data unit to the source network device, or indicates a moment at which a radio protocol layer (for example, an SDAP layer or a PDCP layer) of the UE receives the data unit from an upper layer (for example, an application layer or an IP layer), a moment at which a radio protocol layer (for example, an SDAP layer or a PDCP layer) of the UE sends the data unit to a next layer, or any moment between a moment at which a radio protocol layer (for example, an SDAP layer or a PDCP layer) of the UE receives the data unit from an upper layer (for example, an application layer or an IP layer) and a moment at which the radio protocol layer (for example, the SDAP layer or the PDCP layer) of the UE sends the data unit to a next layer. The first time uses timing of the source network device as a reference.

S902: The target network device determines information that is about a second time and that corresponds to the data unit.

The target network device needs to send a data packet received from the source network device to a core network device. To accurately obtain a delay of receiving the data packet from the UE, the target network device needs to determine a moment at which the target network device receives the data packet from the UE, namely, the second time.

Optionally, when the first time uses the timing of the source network device as a reference, the target network device may determine the information about the second time based on the information about the first time and a timing offset. The second time is a moment at which the source network device receives the data packet. The second time uses timing of the target network device as a reference.

The UE may be handed over between different cells or between different network devices. Therefore, the timing offset includes at least one of the following: a timing offset between the target network device and the source network device, or a timing offset between the target network device and the source network device.

Optionally, when the first time is the absolute time at which the source network device receives the data unit, the target network device may determine the information about the second time based on the information about the first time and a correspondence between an absolute time of the target network device and a relative time of the target network device in the target network device. The second time is a moment at which the source network device receives the data unit. The second time uses the timing of the target network device as a reference.

Optionally, the target network device may further determine the information about the second time based on the information about the first time, where the second time is an absolute time corresponding to the moment at which the source network device receives the data unit.

S903: The target network device determines information about a delay of the data unit based on the information about the second time and a moment at which the data unit is sent.

The target network device determines, based on the second time and a moment at which the data packet corresponding to the data unit is submitted to the core network device, that a difference between the two moments is a delay of the data packet.

Optionally, the moment at which the data unit is sent is a moment at which the target network device sends the data packet in the data unit to a core network, a moment at which an SDAP layer of the target network device sends the data packet in the data unit to a PDCP layer, or a moment at which a PDCP layer of the target network device sends the data packet in the data unit to an SDAP layer.

Optionally, the method further includes: sending the information about the delay to a network management system. The network management system monitors transmission efficiency of a network based on a requirement of an operator. The target network device sends the information about the delay to the network management system, so that the operator can optimize the network based on the information about the delay.

According to the communications method provided in this embodiment of this application, in an uplink data transmission process, the information about the first time is information about a time that uses the timing of the source network device as a reference, and the target network device converts the information about the first time into the information about the second time that uses the timing of the target network device as a reference. Therefore, the terminal device may use timing of a current serving cell in a unified manner. This reduces processing complexity of the terminal device.

In a specific implementation, in the foregoing embodiment, in the uplink transmission process, the target network device may compensate for a time required for transferring from the source network device to a target base station, or unify a form of the first time and a form of the second time, and calculate the delay. The following Implementations A19 to A25 are included. It should be noted that uplink transfer is performed only in lossless handover.

Implementation A19: The source network device transfers a to-be-handed-over data unit to the target network device in an SDAP PDU/PDCP SDU form. The source network device enables a header of an SDAP PDU to carry information about a relative time, and the target network device calculates a delay. The target network device calculates the delay in the following manner: The target network device performs compensation based on the information that is about the time and that is carried in the SDAP PDU and a timing offset between two cells. For example, the timing offset between the source network device and the target network device is Diff = T_source - T_target. The information that is about the time and that is carried in the SDAP PDU corresponds to a moment T1, and a representation form of a relative time corresponding to T1 in the source network device is a frame 1 and a subframe 1 of the source network device. It is assumed that a moment at which the SDAP layer of the target network device submits the data packet to an upper layer (for example, the core network) is T2, and a representation form of a relative time corresponding to T2 in the target network device is a frame 1 and a subframe 3 of the target network device. In this case, when the target network device calculates the delay, the frame 1 and the subframe 1 that are of the source network device and that correspond to the moment T1 are first converted into the frame 1 and a subframe 2 that are of the target network device and that correspond to the moment T1 based on the timing offset between the two cells. Then, the target network device calculates the corresponding delay based on the frame 1 and the subframe 2 of the target network device, and the frame 1 and the subframe 3 of the target network device. For example, the information that is about the time and that is in the SDAP PDU corresponds to the frame 1, the subframe 1, and the moment T1. A relative time of the same moment in the target network device is the frame 1 and the subframe 2. The moment at which the SDAP layer of the target network device submits the data packet to the upper layer is the frame 3 and the subframe 3. In this case, the delay is (frame 3 - frame 1) x 10 ms + (subframe 3 - subfram 2) x 1 ms.

The implementation A19 may be applied to an uplink handover transmission scenario. The source network device transfers the to-be-handed-over data unit to the target network device in the SDAP PDU/PDCP SDU form. The source network device enables the header of the SDAP PDU to carry the information about the first time, and the first time is a relative time. The target network device determines the information about the second time based on the information about the first time and the timing offset, to calculate the delay by using, in the unified manner, the timing of the current serving cell as a reference.

Implementation A20: The source network device transfers a to-be-handed-over data unit to the target network device in an SDAP PDU/PDCP SDU form. The source network device enables a GTP-U extension header to carry information about a relative time, and the target network device calculates a delay. The target network device calculates the delay in the following manner: The target network device performs compensation based on the information that is about the time and that is carried in the GTP-U and a timing offset between two cells. For example, the timing offset between the source network device and the target network device is Diff = T_source - T_target. The information that is about the time and that is carried in the GTP-U corresponds to a moment T1, and a representation form of a relative time corresponding to T1 in the source network device is a frame 1 and a subframe 1 of the source network device. It is assumed that a moment at which the SDAP layer of the target network device submits the data packet in the data unit to an upper layer is T2, and a representation form of a relative time corresponding to T2 in the target network device is a frame 1 and a subframe 3 of the target network device. In this case, when the target network device calculates the delay, the frame 1 and the subframe 1 that are of the source network device and that correspond to the moment T1 are first converted into the frame 1 and a subframe 2 that are of the target network device and that correspond to the moment T1 based on the timing offset of the two cells. Then, the target network device calculates the corresponding delay based on the frame 1 and the subframe 2 of the target network device, and the frame 1 and the subframe 3 of the target network device. For example, the information that is about the time and that is in the SDAP PDU corresponds to the frame 1, the subframe 1, and the moment T1. A relative time of the same moment in the target network device is the frame 1 and the subframe 2. The moment at which the SDAP layer of the target network device submits the data packet to the upper layer is the frame 3 and the subframe 3. In this case, the delay is (frame 3 - frame 1) x 10 ms + (subframe 3 - subframe 2) x 1 ms.

The implementation A20 may be applied to an uplink handover transmission scenario. The source network device transfers the to-be-handed-over data unit to the target network device in the SDAP PDU/PDCP SDU form. The source network device enables the GTP-U extension header to carry the information about the first time, and the first time is a relative time. The target network device determines the information about the second time based on the information about the first time and the timing offset, to calculate the delay by using, in the unified manner, the timing of the current serving cell as a reference.

Implementation A21: The source network device transfers a to-be-handed-over data unit to the target network device in an SDAP PDU/PDCP SDU form. The source network device enables a GTP-U extension header to carry an absolute time and information about a delay of the data unit, and the target network device calculates the delay. The absolute time is a moment at which the source network device receives a data packet, and is specifically a moment at which a PDCP layer of the source network device receives a PDCP SDU. The information about the delay is a delay that is calculated by the source network device and that is from a moment at which the data packet is sent from the UE to a moment at which the source network device receives the data packet. The target network device calculates the delay in the following manner: The target network device calculates the corresponding delay based on the absolute time carried in the GTP-U, the information about the delay of the data unit, and a time required when the target network device submits the data packet corresponding to the data unit to an upper layer. For example, an absolute time at which the PDCP layer of the target network device submits the packet to the upper layer is T2, the absolute time carried in the GTP-U is T1, and the delay in sending the data unit from the UE to the source network device to receiving the packet is Delay-source. In this case, a total delay of this packet is calculated as follows: T2 - T1 + Delay_source.

The implementation A21 may be applied to an uplink handover transmission scenario. The source network device transfers the to-be-handed-over data unit to the target network device in the SDAP PDU/PDCP SDU form. The source network device enables the GTP-U extension header to carry the information about the first time, and the first time is an absolute time. The target network device determines the information about the second time based on the information about the first time and the timing offset, to calculate the delay by using, in the unified manner, the timing of the current serving cell as a reference.

Implementation A22: The source network device transfers a to-be-handed-over data unit to the target network device in an SDAP PDU/PDCP SDU form. The source network device enables a header of an SDAP PDU to carry information about a relative time, and the target network device calculates a delay. The target network device calculates the delay in the following manner: The target network device performs compensation based on the information that is about the relative time and that is carried in the SDAP PDU and a timing offset between two cells. For example, the timing offset between the source network device and the target network device is Diff = T_source - T_target. The information that is about the time and that is carried in the GTP-U extension header corresponds to a moment T1, and an absolute time reference point corresponding to T1 is a reference point 1. The relative time is a relative time 1 (the information about the relative time carried in the header of the SDAP PDU transferred by the source network device to the target network device). In this case, the target network device may calculate an absolute time reference point 2 and a relative time 2 that are in the target network device and that correspond to T1. For example, the target network device learns of information about the absolute time reference point sent by the source network device (to be specific, the target network device learns of a time domain location of the absolute time reference point of the source network device). For example, the time domain location is location information of a frame number and a subframe number. In this way, the target network device learns of, based on the timing offset, a specific time reference point corresponding to the packet, to learn of a corresponding absolute time T1. Then, the target network device obtains, based on the absolute time T1, an absolute time reference point 2 and a relative time 2 that correspond to the target network device. Then, the delay is calculated based on an absolute time T2 at which the SDAP layer of the target network device submits the packet to an upper layer (at the absolute time reference point 2 and a relative time 3 that correspond to the target network device) and the absolute time T1 (at the absolute time reference point 2 and the relative time 2 that correspond to the target network device).

The implementation A22 may be applied to an uplink handover transmission scenario. The source network device transfers the to-be-handed-over data unit to the target network device in the SDAP PDU/PDCP SDU form. The source network device enables the header of the SDAP PDU to carry the information about the first time, and the first time is a relative time. The target network device determines the information about the second time based on the information about the first time and the timing offset, to calculate the delay by using, in the unified manner, the timing of the current serving cell as a reference.

Implementation A23: The source network device transfers a to-be-handed-over data unit to the target network device in an SDAP PDU/PDCP SDU form. The source network device enables a GTP-U extension header to carry an absolute time, and enables an SDAP PDU to carry a relative time. The target network device calculates a delay in the following manner: calculating the delay based on the absolute time carried in the GTP-U and the relative time carried in the SDAP PDU. For example, if a moment at which the target network device submits the SDAP SDU to an upper layer is T2, and a moment corresponding to the absolute time carried in the GTP-U and the relative time carried in the SDAP PDU is T1, the delay is T2 - T1.

The implementation A23 may be applied to an uplink handover transmission scenario. The source network device transfers the to-be-handed-over data unit to the target network device in the SDAP PDU/PDCP SDU form. The source network device enables the GTP-U extension header to carry the information about the first time, and the first time is an absolute time. The target network device determines the information about the second time based on the information about the first time and the timing offset, to calculate the delay by using, in the unified manner, the timing of the current serving cell as a reference.

Implementation A24: The source network device transfers a to-be-handed-over data unit to the target network device in an SDAP PDU/PDCP SDU form. The source network device enables a GTP-U extension header to carry information about an absolute time, or information about an absolute time and a relative time. The target network device calculates a delay in the following manner: calculating the delay based on the absolute time carried in the GTP-U. For example, assuming that an absolute time at which the PDCP layer of the target network device submits the data packet to an upper layer is T2, and the information that is about the absolute time and that is carried in the GTP-U corresponds to a moment T1, the delay is T2 - T1.

The implementation A24 may be applied to an uplink handover transmission scenario. The source network device transfers the to-be-handed-over data unit to the target network device in the SDAP PDU/PDCP SDU form. The source network device enables the header of the SDAP PDU to carry the information about the first time, and the first time is an absolute time, or an absolute time and a relative time. The target network device determines the information about the second time based on the information about the first time and the timing offset, to calculate the delay by using, in the unified manner, the timing of the current serving cell as a reference.

Implementation A25: The source network device transfers a to-be-handed-over data unit to the target network device in an SDAP PDU/PDCP SDU form. The source network device enables a GTP-U extension header to carry an absolute time and information about a delay of a data packet. The absolute time is a moment at which the source network device receives the data unit, and is specifically a moment at which a PDCP layer of the source network device receives a PDCP SDU. The information about the delay is a delay that is calculated by the source network device and that is from a moment at which the data packet is sent from a terminal to a moment at which the source network device receives the data packet. The target network device calculates the delay in the following manner: calculating the corresponding delay based on the absolute time carried in the GTP-U + the information about the delay of the packet + a time required when the target network device submits the packet to an upper layer. For example, an absolute time at which the PDCP layer of the target network device submits the packet to the upper layer is T2, the absolute time carried in the GTP-U is T1, and the delay of the packet in the source network device is Delay_source. In this case, a total delay of the packet is T2 - T1 + Delay_source.

The implementation A25 may be applied to an uplink handover transmission scenario. The source network device transfers the to-be-handed-over data unit to the target network device in the SDAP PDU/PDCP SDU form. The source network device enables the GTP-U extension header to carry the information about the first time, and the first time is an absolute time. The target network device determines the information about the second time based on the information about the first time and the timing offset, to calculate the delay by using, in the unified manner, the timing of the current serving cell as a reference.

FIG. 10 is a schematic flowchart of still another communications method according to an embodiment of this application. The method includes the following steps.

S1001: A receive end device obtains information that is about a first time and that corresponds to a data unit.

The method may be applied to a scenario such as a downlink handover transmission scenario or a scenario in which UE sends a data unit.

Optionally, in a downlink handover transmission process, before S1001, the method further includes: A transmit end device sends the data unit to the receive end device, and correspondingly, the receive end device receives the data unit.

The first time uses timing of a source network device as a reference.

In an implementation, that a receive end device obtains information that is about a first time and that corresponds to a data unit includes: The receive end device receives, from the transmit end device, the information that is about the first time and that corresponds to the data unit.

Optionally, the receive end device is a terminal device, the transmit end device is a target network device, and the method further includes: The receive end device receives a first indication from the transmit end device, where the first indication is used to indicate that the data unit is a data unit transferred from the source network device to the target network device.

In a specific implementation, in a downlink data transmission process, if the UE moves, for example, moves from the source network device to the target network device, the source network device needs to transfer, to the target network device, downlink data that is received from a core network and that has not been correctly received by the UE. When sending a data unit transferred during handover to the target network device, the source network device sends information about a first time at the same time. A moment corresponding to the first time is the same as the corresponding first time when the transmit end device is the target network device in S201, and the first time uses the timing of the source network device as a reference.

The target network device receives the data unit sent by the source network device, and sends the data unit to the terminal device. The target network device receives the information that is about the first time and that corresponds to the data unit sent by the source network device, and sends the information about the first time to the UE. In addition, the first indication is further sent to the terminal device. The first indication is used to indicate that the data unit is a data unit transferred from the source network device to the target network device. Optionally, the first indication may alternatively be included in the data unit, and the first indication may alternatively be included in a header of an SDAP or PDCP PDU corresponding to the data unit. Optionally, the first indication may alternatively be a control data unit. All data units before the control data unit are data units transferred from the source network device to the target network device, and data units after the control packet are not data units transferred from the source network device to the target network device.

In another implementation, that a receive end device obtains information that is about a first time and that corresponds to a data unit includes: The receive end device obtains, from a PDCP layer, the information that is about the first time and that corresponds to the data unit. In a specific implementation, the PDCP layer of the receive end device obtains the data unit from the target network device, and the first time is a time corresponding to the data unit obtained from the PDCP layer by another protocol stack layer of the receive end device in a subsequent processing process. In the scenario in which the UE sends a data unit, the UE records a moment at which the source network device sends the data unit, namely, the first time. The first time is the same as the corresponding first time when the transmit end device is the terminal device in S201, and uses the timing of the source network device as a reference. However, the UE fails to send the data unit to the source network device. In addition, cell handover occurs on the UE, and the UE needs to send the data unit to the target network device. The terminal device sends, to the target network device, the information that is about the first time and that corresponds to the data unit. The first time uses the timing of the source network device as a reference. In addition, the terminal device further sends a first indication to the target network device. The first indication is used to indicate that the data unit is a data unit sent by the terminal device or a data unit sent by the terminal device in a handover process, or indicate that the information that is about the first time and that corresponds to the data unit uses the timing of the source network device as a reference. Optionally, the first indication may alternatively be carried in the data unit. Optionally, the information about the first time is carried in the data unit. The first indication may alternatively be included in a header of an SDAP or PDCP PDU corresponding to the data unit. Optionally, the first indication may alternatively be a control data unit. All data units before the control data unit are data units transferred from the source network device to the target network device, and data units after the control data unit are not data units transferred from the source network device to the target network device. Alternatively, the control data unit indicates ending of a data unit transferred from the source network device to the target network device.

S1002: The receive end device determines, based on the information about the first time, a timing offset, and information about a second time at which the receive end device receives the data unit, information about a delay that the receive end device obtains the data unit.

In a downlink handover transmission scenario, the terminal device receives the data unit and the first indication from the target network device. At the same time, the terminal device receives, from the target network device, the information that is about the first time and that corresponds to the data unit. If the first indication indicates that the data unit is a data unit transferred from the source network device to the target network device, the terminal device calculates, based on the information about the first time, the timing offset, and the information about the second time at which the terminal device receives the data unit, the information about the delay at which the terminal device receives the data unit. The timing offset includes at least one of the following: a timing offset between the target network device and the source network device, or a timing offset between the target network device and the source network device.

Optionally, the second time is a moment at which the UE successfully receives the data unit, a moment at which a radio protocol layer (for example, an SDAP layer or a PDCP layer) of the UE submits a data packet of the data unit to an upper layer (for example, an application layer or an IP layer), a moment at which a radio protocol layer (for example, a PDCP layer) of the UE submits a data packet of the data unit to an upper radio protocol layer (for example, an SDAP layer), or any moment between a moment at which a radio protocol layer (for example, an SDAP layer or a PDCP layer) of the UE receives the data unit and a moment at which a data packet of the data unit is submitted to an upper layer.

Optionally, the method further includes the following step.

The receive end device sends the information about the delay to the target network device.

After calculating the delay, the terminal device sends the information about the delay to the target network device. The target network device receives the information about the delay, and may learn of the delay of downlink transmission from the target network device to the terminal device.

In the scenario in which the UE sends a data unit, optionally, the second time uses timing of the target network device as a reference. The target network device receives the data unit and the first indication from the terminal device. The information that is about the first time and that corresponds to the data unit is received. The target network device may determine, based on the information about the first time, the timing offset, and the information about the second time at which the sent data unit is received, the information about the delay of receiving the sent data unit. The timing offset includes at least one of the following: a timing offset between the target network device and the source network device, or a timing offset between the target network device and the source network device.

Optionally, the second time is a moment at which the target network device successfully receives the data unit, a moment at which a radio protocol layer (for example, an SDAP layer or a PDCP layer) of the target network device submits a data packet of the data unit to an upper layer (for example, an application layer, an IP layer, or the core network), a moment at which a radio protocol layer (for example, a PDCP layer) of the target network device submits a data packet of the data unit to an upper radio protocol layer (for example, an SDAP layer), or any moment between a moment at which a radio protocol layer (for example, an SDAP layer or a PDCP layer) of the target network device receives the data unit and a moment at which a data packet of the data unit is submitted to an upper layer.

Optionally, the target network device may further convert the information about the first time and the information about the second time into other unified time forms to calculate the delay of the data unit, for example, convert both the information about the first time and the information about the second time into times that use the source network device as a reference, absolute times, or the like.

Optionally, the method further includes: sending the information about the delay to a network management system. The network management system monitors transmission efficiency of a network based on a requirement of an operator. The target network device sends the information about the delay to the network management system, so that the operator can optimize the network based on the information about the delay.

According to the communications method provided in this embodiment of this application, in the downlink data transmission process, the information about the first time is information about a time that uses the timing of the source network device as a reference, and the receive end device converts the information about the first time into information about a time that uses the timing of the target network device as a reference, to calculate the delay by using a timing of a current serving cell in a unified manner.

In a specific implementation, in the foregoing embodiment, in a downlink transmission process, the terminal device serves as the receive end device, and the terminal device modifies the information about the time. The following plurality of implementations such as implementations B1 to B8 may be included.

Implementation B1: The source network device transfers a to-be-handed-over data unit to the target network device in an SDAP PDU/PDCP SDU form. The source network device transfers an SDAP PDU/PDCP SDU, where the SDAP PDU carries information about a relative time (the information about the time is a frame number, a subframe number, and the like). The target network device enables a header of an SDAP PDU sent to the UE to carry the information about the time. The UE calculates a delay in the following manner: The UE converts, based on the time offset between the source network device and the target network device, the information that is about the time and that is carried in the SDAP PDU. For example, if the UE finds that the data unit is a data unit transferred from the source network device to the target network device, the UE learns that the information that is about the time and that is carried in the data unit uses the source network device as a reference. In this case, the UE may calculate, based on the time offset between the source network device and the target network device, a relative time that is of the target network device and that corresponds to the carried information about the time. For example, the information that is about the time and that is in the SDAP PDU corresponds to a frame 1, a subframe 1, and a moment T1. The UE may learn, based on a time offset between two cells, that a relative time of the same moment in the target network device is a frame 1 and a subframe 2. Then, the UE uses, based on a difference between a moment at which the SDAP layer submits the packet to the upper layer and a relative time that is of the target network device and into which the information that is about the time and that is carried in the SDAP PDU is converted, the difference as a delay of the packet. Optionally, the UE may alternatively convert the information that is about the time and that is carried in the SDAP PDU and a moment at which the UE submits the packet to the upper layer into other uniform forms to calculate a delay of the packet, for example, convert the information that is about the time and that is carried in the SDAP PDU and the moment at which the UE submits the packet to the upper layer into times that use the source network device as a reference, absolute times, or the like.

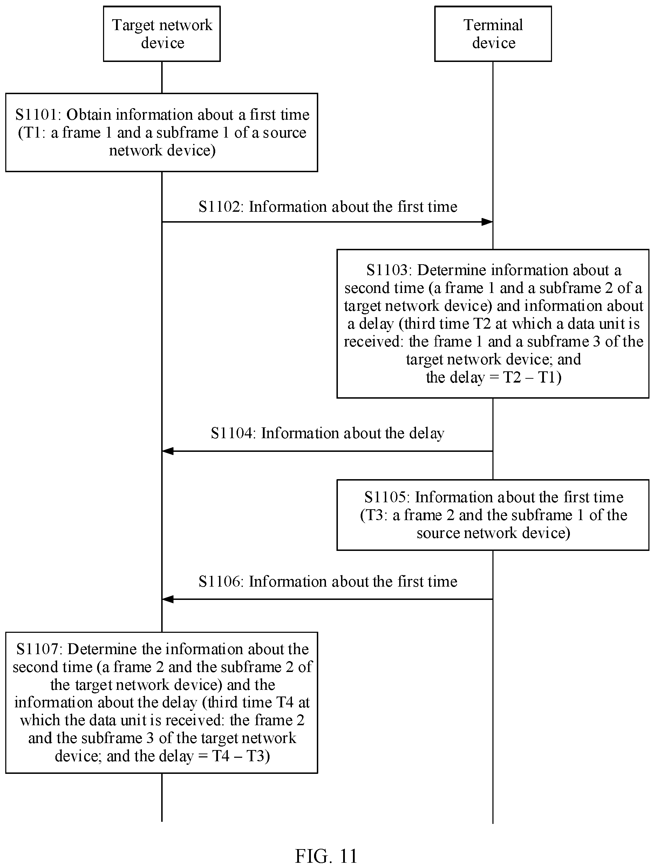

FIG. 11 is an example of a schematic flowchart in which the receive end device determines the information about the second time. The method includes the following steps.

S1101: In the downlink handover transmission process, the target network device obtains the information that is about the first time and that corresponds to the data unit.

For example, a first time T1 uses the timing of the source network device as a reference, and is specifically the frame 1 and the subframe 1.

Specifically, the target network device may obtain the information about the first time from the source network device, or may obtain the information about the first time from an upper protocol layer.

Optionally, the target network device further receives the data unit from the source network device.

S1102: The target network device sends the information about the first time to the terminal device.

Optionally, the target network device further sends the data unit to the terminal device.

S1103: The terminal device determines the information that is about the second time and that corresponds to the data unit, and determines information about a delay based on the information about the second time and information about a third time at which the data unit is received.

The second time uses the timing of the target network device as a reference, and the second time is specifically the frame 1 and the subframe 2.

A third time T2 uses the timing of the target network device as a reference, and T2 is the frame 1 and a subframe 3.

The terminal device uses the timing of the target network device as a reference in the unified manner, and determines that the delay = T2 - T1. In other words, the delay = (frame 1, subframe 3) - (frame 1, subframe 2) = one subframe.

S1104: The terminal device sends the information about the delay to the target network device.

S1101 to S1104 are downlink handover transmission processes, and may be independent of a following process in which the terminal device sends the data unit.

S1105: In the process in which the terminal device sends the data unit, for example, in a process in which the terminal device retransmits the data unit to the target network device, the terminal device obtains the information that is about the first time and that corresponds to the data unit.

For example, if a first time T3 at which the UE sends the data unit to the source network device uses the timing of the source network device as a reference, T3 is a frame 2 and a subframe 1.

S1106: The terminal device sends the information about the first time to the target network device.

S1107: The target network device determines the information about the second time, and determines the information about the delay based on the information about the second time and the information about the third time at which the data unit is received.

The UE determines, based on the information about the first time and the timing offset, that the first time T3 that uses the timing of the target network device as a reference is the frame 2 and the subframe 2.

For example, a third time T4 at which the target network device receives the data unit uses the timing of the target network device as a reference, and T4 is the frame 2 and the subframe 3. In this case, delay = T4 - T3 = (frame 2, subframe 3) - (frame 2, subframe 4) = one subframe.

Implementation B2: The source network device transfers a to-be-handed-over data unit to the target network device in an SDAP PDU/PDCP SDU form. The source network device transfers an SDAP PDU, and enables a GTP-U extension header to carry information about a time (the information about the time is a frame number, a subframe number, and the like). In addition, the target network device adds the information that is about the time and that is carried in the GTP-U to a PDCP PDU. The information that is about the time and that is carried in the GTP-U is information about a time at which the source network device receives the data packet. The UE calculates a delay in the following manner: The UE converts, based on the time offset between the source network device and the target network device, the information that is about the time and that is carried in the PDCP PDU. For example, if the UE finds that the data unit is a data unit transferred from the source network device to the target network device, the UE learns that the information that is about the time and that is carried in the data unit uses the source network device as a reference. In this case, the UE may calculate, based on the time offset between the source network device and the target network device, a relative time that is of the target network device and that corresponds to the carried information about the time. For example, the information that is about the time and that is in the PDCP PDU corresponds to a frame 1, a subframe 1, and a moment T1. The UE may learn, based on a time offset between two cells, that a relative time of the same moment in the target network device is a frame 1 and a subframe 2. Then, the UE uses, based on a difference between a moment at which the PDCP layer submits the packet to the upper layer and a relative time that is of the target network device and into which the information that is about the time and that is carried in the PDCP PDU is converted, the difference as a delay of the packet. Optionally, the UE may alternatively convert the information that is about the time and that is carried in the PDCP PDU and a moment at which the UE submits the packet to the upper layer into uniform forms to calculate a delay of the packet, for example, convert the information that is about the time and that is carried in the PDCP PDU and the moment at which the UE submits the packet to the upper layer into times that use the source network device as a reference, absolute times, or the like.

Implementation B3: The source network device transfers a to-be-handed-over data unit to the target network device in an SDAP PDU/PDCP SDU form. The source network device transfers an SDAP PDU, and enables the SDAP PDU to carry a time offset equivalent to an absolute time in the source network device, namely, information about a relative time. In addition, the target network device adds, to the SDAP PDU, information that is about a relative time and that is carried in a GTP-U. The information that is about the time and that is carried in the GTP-U indicates a moment at which the source network device receives the data packet, and is specifically a moment at which an SDAP layer of the source network device receives the SDAP SDU. The UE calculates a delay in the following manner: The UE converts, based on the time offset between the source network device and the target network device, the information that is about the time and that is carried in the SDAP PDU. For example, if the UE finds that the data unit is a data unit transferred from the source network device to the target network device, the UE learns that the information that is about the time and that is carried in the data unit uses the source network device as a reference. In this case, the UE may calculate, based on the time offset between the source network device and the target network device, a relative time that is of the target network device and that corresponds to the carried information about the time. For example, if the UE finds that the data unit is a data unit transferred from the source network device to the target network device, the UE may learn of an absolute time T1 of the source network device, and the relative time in the SDAP PDU uses the absolute time T1 of the source network device as a reference. Therefore, a start time of the data unit is T1 + the relative time carried in the SDAP PDU. A moment at which the SDAP layer of the UE submits the data unit to the upper layer is an absolute time T2 of the target network device, and a delay of the packet is T2 - (T1 + the relative time carried in the SDAP PDU).

Implementation B4: The source network device transfers a to-be-handed-over data unit to the target network device in an SDAP PDU/PDCP SDU form. The source network device transfers an SDAP PDU, and enables a GTP-U extension header to carry a time offset equivalent to an absolute time in the source network device, namely, information about a relative time. In addition, the target network device adds, to a PDCP PDU, the information that is about the relative time and that is carried in the GTP-U. The absolute time carried in the GTP-U is a moment at which the source network device receives the data packet, and is specifically a moment at which a PDCP layer of the source network device receives the PDCP SDU. The UE calculates a delay in the following manner: The UE converts, based on the time offset between the source network device and the target network device, the information that is about the time and that is carried in the PDCP PDU. For example, if the UE finds that the data unit is a data unit transferred from the source network device to the target network device, the UE learns that the information that is about the time and that is carried in the data unit uses the source network device as a reference. In this case, the UE may calculate, based on the time offset between the source network device and the target network device, a relative time that is of the target network device and that corresponds to the carried information about the time. For example, if the UE finds that the data unit is a data unit transferred from the source network device to the target network device, the UE may learn of an absolute time T1 of the source network device, and the relative time in the PDCP PDU uses the absolute time T1 of the source network device as a reference. Therefore, a start time of the data unit is T1 + the relative time carried in the PDCP PDU. A moment at which the PDCP layer of the UE submits the data unit to the upper layer is an absolute time T2 of the target network device, and the delay of the data unit is T2 - (T1 + the relative time carried in the PDCP PDU).

Implementation B5: The source network device transfers a to-be-handed-over data unit to the target network device in an SDAP SDU form. The source network device enables a GTP-U extension header to carry information about a relative time (the information about the time is a frame number, a subframe number, and the like), and the target network device enables a header of an SDAP PDU sent to the UE to carry the information about the time. The UE calculates a delay in the same way as B1.

Implementation B6: The source network device transfers a to-be-handed-over data unit to the target network device in an SDAP SDU form. The source network device transfers an SDAP SDU, and enables a GTP-U extension header to carry information about a time (the information about the time is a frame number, a subframe number, and the like). In addition, the target network device adds the information that is about the time and that is carried in the GTP-U to a PDCP PDU. The information that is about the time and that is carried in the GTP-U is information about a time at which the source network device receives the data packet. The UE calculates a delay in the same way as B2.

Implementation B7: The source network device transfers a to-be-handed-over data unit to the target network device in an SDAP SDU form. The source network device transfers an SDAP SDU, and enables a GTP-U extension header to carry a time offset equivalent to an absolute time in the source network device, namely, information about a relative time. In addition, the target network device adds, to an SDAP PDU, the information that is about the relative time and that is carried in the GTP-U. The information that is about the time and that is carried in the GTP-U indicates a moment at which the source network device receives the data packet, and is specifically a moment at which an SDAP layer of the source network device receives the SDAP SDU. The UE calculates a delay in the same way as B3.

Implementation B8: The source network device transfers a to-be-handed-over data unit to the target network device in an SDAP SDU form. The source network device transfers an SDAP SDU, and enables a GTP-U extension header to carry a time offset equivalent to an absolute time in the source network device, namely, information about a relative time. In addition, the target network device adds, to a PDCP PDU, the information that is about the relative time and that is carried in the GTP-U. The absolute time carried in the GTP-U is a moment at which the source network device receives the data packet. The UE calculates a delay in the same way as B4.

In a specific implementation, the UE sends, to the target network device, a data unit that is not correctly received by the source network device. In this case, when the receive end device is the target network device, the target network device calculates information about a delay. Specifically, the following two implementations B9 and B10 are included.

Implementation B9: The UE sends, to the target network device, the data unit that is not correctly received by the source network device. The target network device calculates the delay based on the time offset between the source network device and the target network device. For example, if the target network device finds that the data unit is a data unit transferred from the source network device to the target network device, the target network device learns that the information that is about the time and that is carried in the data unit uses the source network device as a reference. In this case, the target network device may calculate, based on the time offset between the source network device and the target network device, a relative time that is of the target network device and that corresponds to the carried information about the time. That the information about the time is added to the SDAP layer is used as an example. The information that is about the time and that is in the SDAP PDU corresponds to a frame 1, a subframe 1, and a moment T1. The target network device may learn, based on the time offset between the source network device and the target network device, that a relative time of the same moment in the target network device is a frame 1, and a subframe 2. Then, the target network device uses, based on the SDAP layer, a difference between the moment at which the data unit is submitted to the upper layer and a relative time that is of the target network device and into which the information that is about the time and that is carried in the SDAP PDU is converted, the difference as the delay of the data unit.

Implementation B10: The UE sends, to the target network device, the data unit that is not correctly received by the source network device. The target network device calculates the delay based on the time offset between the source network device and the target network device. For example, if the target network device finds that the data unit is a data unit transferred from the source network device to the target network device, the target network device learns that the information that is about the time and that is carried in the data unit uses the source network device as a reference. In this case, the target network device may calculate, based on the time offset between the source network device and the target network device, a relative time that is of the target network device and that corresponds to the carried information about the time. That the information about the time is added to the SDAP layer is used as an example. If the target network device finds that the data unit is a data unit transferred from the source network device to the target network device, the target network device may learn that the information that is about the time and that is carried in the SDAP PDU corresponds to an absolute time reference point 1. In this way, an absolute time T1 corresponding to the information about the time is learned based on the information that is about the time and that is carried in the SDAP PDU. For example, the target network device learns of information about the absolute time reference point sent by the source network device (to be specific, the target network device learns of a time domain location of the absolute time reference point of the source network device). For example, the time domain location is location information of a frame number and a subframe number. In this way, the target network device learns of, based on the timing offset, a specific time reference point corresponding to the data unit, to learn of a corresponding absolute time T1. Then, the target network device obtains, based on the absolute time T1, an absolute time reference point 2 and a relative time 2 that correspond to the target network device. Then, the delay is calculated based on the absolute time T2 at which the PDCP layer of the target network device submits the data unit to the upper layer (at the absolute time reference point 2 and a relative time 3 that correspond to the target network device) and the absolute time T1 (at the absolute time reference point 2 and the relative time 2 that correspond to the target network device).

In a specific implementation, the source network device needs to transfer out-of-order data units received from the UE to the target network device, so that the target network device calculates latencies corresponding to these out-of-order data units. It should be noted that uplink transfer is performed only in lossless handover. One method is to use the methods in A17 to A23. Another method is to use the following B11.

Implementation B11: The source network device transfers a to-be-handed-over data unit to the target network device in an SDAP PDU/PDCP SDU form. The source network device enables a header of an SDAP PDU to carry information about a time. The information about the time may be a relative time (a frame number, a subframe number, and the like) that uses the timing of the source network device as a reference, or a time offset that uses a radio frame of an absolute time in the source network device as a reference. The target network device calculates a delay based on the time offset between the source network device and the target network device. The target network device calculates the delay in the same way as B9 and B10.

This application further proposes how a CU obtains a correspondence between an absolute time and a radio frame number or/and a subframe number in a CU-DU architecture, so that the CU sets information about a time at an SDAP/PDCP layer. For example, in this application, when the CU is enabled to carry the information about the time at the SDAP/PDCP layer, the information about the time carries a time offset that uses an absolute time as a reference. A base station notifies UE of an absolute time corresponding to a radio frame number or a subframe number, for example, notifies the UE by using a broadcast message or a radio resource control (radio resource control, RRC) message.

Optionally, a DU is responsible for configuring, for the UE, a correspondence that is between an absolute time and a radio frame number or/and a subframe number and that is in a broadcast message. The DU sends a message to the CU, where the message carries the correspondence between the absolute time and the frame number or/and the subframe number, and a scheduling arrangement of each system information block (system information block, SIB), for example, at least one of a scheduling list of each SIB, a window size of a system message, and a cycle of system information. The CU may learn of a radio frame number or/and a subframe number corresponding to each moment, so that the CU learns how to set, at the SDAP/PDCP layer, information that is about a time and that corresponds to a data unit.

Optionally, the CU is responsible for configuring, for the UE, a correspondence that is between an absolute time and a radio frame number or/and a subframe number and that is in a broadcast message. The CU sends a message to the DU, where the message carries the correspondence between the absolute time and the frame number or/and the subframe number, and a scheduling arrangement of each system information block SIB (system information block), for example, at least one of a scheduling list of each SIB, a window size of a system message, and a cycle of system information. In this way, the DU can learn how to schedule each system message.

Optionally, the CU is responsible for configuring, for the UE, a correspondence that is between an absolute time and a radio frame number or/and the subframe number and that is in a broadcast message. The DU sends a message to the CU, where the message carries at least the correspondence between the absolute time and the frame number or/and the subframe number, a scheduling arrangement of each system information block SIB (system information block), for example, at least one of a scheduling list of each SIB, a window size of a system message, and a cycle of system information.

Optionally, the foregoing information may be exchanged between CU-UP and the DU, or the foregoing information may be exchanged between CU-CP and the DU, and then the foregoing information may be exchanged between the CU-CP and the CU-UP. The foregoing information refers to the correspondence between the absolute time and the frame number or/and the subframe number, and the scheduling arrangement of each system information block.

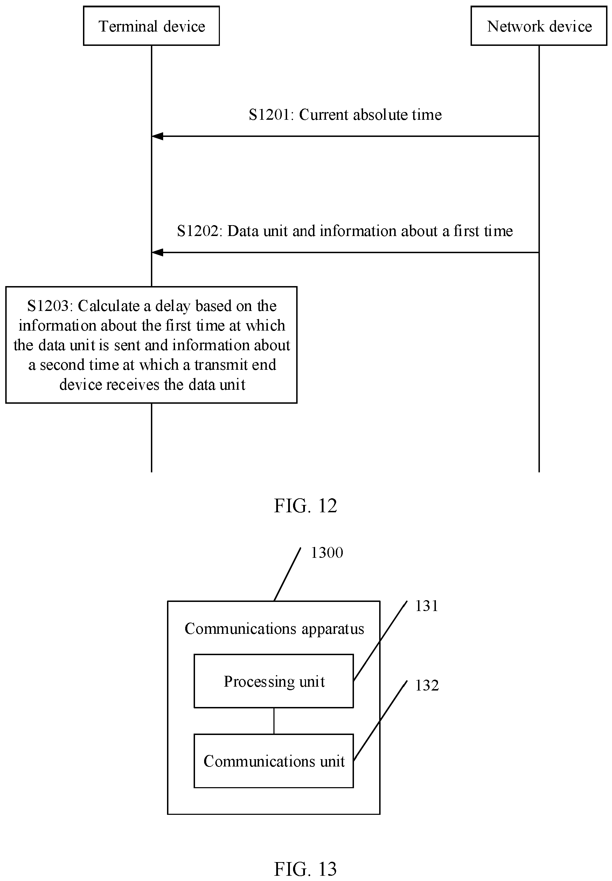

FIG. 12 is a schematic flowchart of still another communications method according to an embodiment of this application. Specifically, in this application, information that is about a time and that corresponds to a data unit on a network device side and information that is about a time and that corresponds to the data unit on a UE side correspond to relative times by using an absolute time point as a reference.

S1201: The network device notifies the UE of a current absolute time.

In an implementation, the network device may broadcast the current absolute time in a broadcast message. For example, the broadcast message carries an absolute time corresponding to a system frame number (system frame number, SFN) boundary on or after an end boundary of a broadcast message window corresponding to the broadcast message.

In another implementation, the network device may notify the UE of the current absolute time in a radio resource control (radio resource control, RRC) message (for example, a downlink information transfer message (downlink information transfer message)). For example, an absolute time corresponding to an SFN end boundary is notified.

The foregoing absolute time may carry an offset time after a fixed absolute time. For example, the fixed time is 00:00:00 on January 1, 1900 (midnight between December 31, 1899 and January 1, 1900), or 00:00:00 on January 6, 1980 (a global positioning system (global positioning system, GPS) time). The absolute time may be a coordinated universal time (coordinated universal time, UTC) or a GPS time. For specific content, refer to the SIB 16 in the 3GPP 36.331 or a method for carrying time in the downlink information transfer message.

S1202: A transmit end device sends a data unit and information about a first time.

During uplink transmission, the transmit end device may be the UE, and a receive end device may be the network device. During downlink transmission, the transmit end device may be the network device, and a receive end device may be the UE. A procedure shown in FIG. 12 is an example of downlink transmission.

The information about the first time corresponds to the data unit. The sent information about the first time may be an offset relative to an absolute time. For example, the network device may notify the UE of a configuration of a time reference point (by using a broadcast message or an RRC message): using an absolute time as a start point, and using a specific time as a cycle at intervals, in other words, notifying the start point and/or the cycle. Alternatively, a protocol specifies the content. The carried information about the first time is a time offset relative to a start point of a current cycle. For example, an absolute time (for example, 00:00:00 on January 1, 1900 in the solar calendar, namely, midnight between December 31, 1899 and January 1, 1900; or 00:00:00 on January 6, 1980 in the solar calendar) is used as a start point, and a cycle is 1 s. Assuming that a corresponding absolute time at which the transmit end device sends a data unit is 10:11:15:20 on November 7, 2018, the time reference point is 10:11:15 on November 7, 2018, and the carried information about the first time is 20 milliseconds. It should be noted that, in this embodiment, how a CU-UP learns of configurations of these time reference points in a CU-CP and CU-UP scenario further needs to be additionally resolved. For example, the CU-CP needs to notify the CU-UP of the configurations of these time reference points. To be specific, an absolute time is used as a start point, and a specific time is used as a cycle at an interval. In other words, the CU-CP notifies the start point and/or the cycle.

Optionally, the carried information about the first time may be a part of the current absolute time, for example, only millisecond and microsecond content of the current absolute time is carried. Assuming that a corresponding absolute time at which the transmit end device sends a data unit is 10:11:15:20 on November 7, 2018, the carried information about the time is 20 milliseconds and 10 microseconds. The network device notifies of the UE (by using a broadcast message or an RRC message) the information about the time is a specific part of the current absolute time. It should be noted that, in this embodiment, how the CU-UP learns of these configurations in a CU-CP and CU-UP scenario further needs to be additionally resolved. For example, the CU-CP needs to notify the CU-UP of which part of the current absolute time is carried in the information about the time, for example, only millisecond and microsecond content of the current absolute time is carried.

S1203: After receiving the data unit and the information about the first time, the receive end device calculates a delay based on the information about the first time and information about a second time at which the data unit is received.

When receiving the data unit and the information about the first time, the receive end calculates the delay of the data unit, to be specific, subtracts a start moment from an end moment. The start moment is the information that is about the first time and that corresponds to the data unit, and the end moment is a moment at which the receive end device receives the data unit or a moment at which the receive end device submits the data unit to another layer (for example, a moment at which a PDCP layer of the receive end device submits the data unit to an SDAP layer, or a moment at which a PDCP layer of the receive end device submits the data unit to an IP layer or a core network).

When the carried information about the first time is an offset relative to an absolute time, if the receive end device determines that a start point and an end point correspond to different cycle reference points, the receive end device needs to compensate for a difference between the corresponding cycle reference points during delay calculation. For example, a cycle reference point T1 corresponding to the start point is before a cycle reference point T2 corresponding to the end point, and the carried information about the first time is an offset Offset 1 relative to the cycle reference point T1. A moment corresponding to the start point is T1 + Offset 1. The end point is an offset Offset 2 relative to the cycleic reference point T2, and a moment corresponding to the end point is T2 + Offset 2. In this case, the receive end device needs to compensate for a difference between the two cycle reference points. That is, a delay is T2 + Offset 2 - (T1 + Offset 1).

The carried information about the first time may be a part (for example, milliseconds and microseconds) of the current absolute time, and the receive end device may determine an absolute time of a start point. For example, if a part (for example, milliseconds and microseconds) of an absolute time corresponding to a current end point is smaller than a start point, the receive end device learns that the carried information about the first time is milliseconds and microseconds corresponding to a unit of second that is one second earlier than a unit of second in the current absolute time.

According to the communications method provided in this embodiment of this application, the network device explicitly uses an absolute time as a reference, and the transmit end device notifies the receive end device of the information about the time at which the data unit is sent. The information about the time may be the absolute time or a part of the absolute time, and the receive end device may accurately calculate, based on the information that is about the time and that corresponds to the data unit and the information about the time at which the data unit is received, a delay between a moment at which the transmit end device sends the data unit and the moment at which the receive end device receives the data unit.

An embodiment of this application further provides a method for skipping measuring a delay of a data unit transferred from a source network device to a target network device in a handover process.

The method includes: When the target network device or a target cell sends a downlink data unit transferred from the source network device or a source cell to UE, the target network device or the target cell does not carry information about a time or indicates that delay measurement does not need to be performed when sending the data unit. When the target network device or the target cell receives uplink data units transferred from the source network device or the source cell, the target network device or the target cell does not calculate latencies of these uplink data units. When the UE transmits PDCP SDUs that have been associated with PDCP SNs before handover and that are transmitted by the target network device or the target cell, the UE does not carry information about a time or indicates that delay measurement does not need to be performed.

Another optional method is as follows: The target network device enables a handover command sent to UE to carry a timer, where the timer specifies that an uplink data unit does not carry information about a time or indicates that delay measurement does not need to be performed on a data unit within a time of the timer after the UE receives the handover command or after PDCP reestablishment. A delay of a downlink data unit does not need to be calculated.

An embodiment of this application further provides a method for measuring a delay of a data unit transferred from a source network device to a target network device in a handover process without considering a delay caused by handover.

The method includes: When the target network device or a target cell sends, to UE, a downlink data unit transferred from the source network device or a source cell, and when the target network device or the target cell sends the data unit, a carried time is a moment at which the target network device or the target cell receives the data unit. When the UE sends a PDCP SDU that has been associated with a PDCP SN to the target network device or the target cell before handover, the carried time is a moment at which the UE prepares to send the data unit to the target network device or the target cell.

Based on a same concept as those of the communications methods in the foregoing embodiments, as shown in FIG. 13, an embodiment of this application further provides a communications apparatus 1300. The communications apparatus may be applied to the communications method shown in FIG. 2. In a downlink handover scenario, the communications apparatus 1300 may be the network device 100 shown in FIG. 1-1, or may be a component (for example, a chip) used in the network device 100. In a scenario in which a terminal device sends a data unit, the communications apparatus 1300 may be the terminal device 200 shown in FIG. 1-1, or may be a component (for example, a chip) used in the terminal device 200. The communications apparatus 1300 includes a processing unit 131 and a communications unit 132.

The processing unit 131 is configured to obtain formation that is about a first time and that corresponds to a data unit, where the first time uses timing of a source network device as a reference.

The processing unit 131 is further configured to determine information that is about a second time and that corresponds to the data unit, where the second time uses timing of the target network device as a reference.

The communications unit 132 is configured to send the information about the second time to a receive end device.

In an implementation, the communications unit 132 is further configured to receive information about a delay from the receive end device, where the information about the delay is obtained by the receive end device through calculation based on the information about the second time and information about a third time at which the receive end device obtains the data unit.

In another implementation, the communications unit 132 is further configured to receive, from the source network device, the information that is about the first time and that corresponds to the data unit.

In still another implementation, the processing unit 131 is further configured to obtain, from a packet data convergence protocol PDCP layer, the information that is about the first time and that corresponds to the data unit.

For more detailed descriptions of the processing unit 131 and the communications unit 132, directly refer to related descriptions of the network device in the method embodiment shown in FIG. 2, and details are not described herein again.

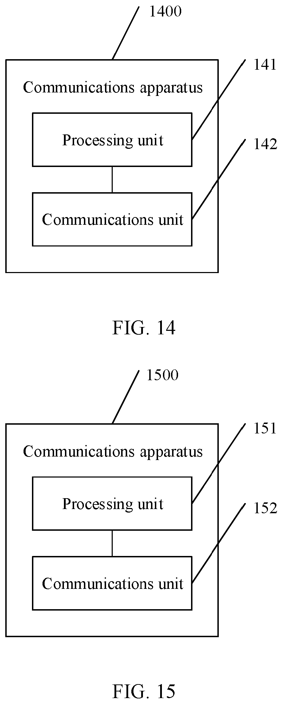

Based on a same concept as those of the communications methods in the foregoing embodiments, as shown in FIG. 14, an embodiment of this application further provides a communications apparatus 1400. The communications apparatus may be applied to the communications method shown in FIG. 9. In a downlink handover scenario, the communications apparatus 1400 may be the network device 100 shown in FIG. 1-1, or may be a component (for example, a chip) used in the network device 100. In a scenario in which a terminal device sends a data unit, the communications apparatus 1400 may be the terminal device 200 shown in FIG. 1-1, or may be a component (for example, a chip) used in the terminal device 200. The communications apparatus 1400 includes a processing unit 141. Optionally, the communications apparatus 1400 may further include a communications unit 142.

The processing unit 141 is configured to obtain formation that is about a first time and that corresponds to a data unit, where the first time uses timing of a source network device as a reference.

The processing unit 141 is further configured to determine information that is about a second time and that corresponds to the data unit, where the second time uses timing of the target network device as a reference.

The processing unit 141 is further configured to determine information about a delay of the data unit based on the information about the second time and a moment at which the data unit is sent.

In an implementation, the communications unit 142 is configured to receive, from the source network device, the information that is about the first time and that corresponds to the data unit.

In another implementation, the processing unit 141 is further configured to obtain, from a packet data convergence protocol PDCP layer, the information that is about the first time and that corresponds to the data unit.

In still another implementation, the communications unit 142 is further configured to send the information about the delay to a network management system.

For more detailed descriptions of the processing unit 141 and the communications unit 142, directly refer to related descriptions of the network device in the method embodiment shown in FIG. 9, and details are not described herein again.

Based on a same concept as those of the communications methods in the foregoing embodiments, as shown in FIG. 15, an embodiment of this application further provides a communications apparatus 1500. The communications apparatus may be applied to the communications method shown in FIG. 10. In a downlink handover scenario, the communications apparatus 1500 may be the network device 100 shown in FIG. 1-1, or may be a component (for example, a chip) used in the network device 100. In a scenario in which a terminal device sends a data unit, the communications apparatus 1500 may be the terminal device 200 shown in FIG. 1-1, or may be a component (for example, a chip) used in the terminal device 200. The communications apparatus 1500 includes a processing unit 151. Optionally, the communications apparatus 1500 may further include a communications unit 152.

The processing unit 151 is configured to obtain formation that is about a first time and that corresponds to a data unit, where the first time uses timing of a source network device as a reference.

The processing unit 151 is further configured to determine, based on the information about the first time, a timing offset, and information about a second time at which the receive end device obtains the data unit, information about a delay that the receive end device obtains the data unit.

In an implementation, the communications unit 152 is configured to receive, from a transmit end device, the information that is about the first time and that corresponds to the data unit.

In another implementation, the communications unit 152 is further configured to receive a first indication from the transmit end device, where the first indication is used to indicate that the data unit is a data unit transferred from the source network device to the target network device.

In still another implementation, the communications unit 152 is further configured to send the information about the delay to the transmit end device.

In still another implementation, the communications unit 152 is further configured to send the information about the delay to a network management system.

For more detailed descriptions of the processing unit 151 and the communications unit 152, directly refer to related descriptions of the network device in the method embodiment shown in FIG. 10, and details are not described herein again.

An embodiment of this application further provides a communications apparatus. The communications apparatus is configured to perform the foregoing communications methods. Some or all of the foregoing communications methods may be implemented by using hardware, or may be implemented by using software.

Optionally, in a specific implementation, the communications apparatus may be a chip or an integrated circuit.

Optionally, when some or all of the communications methods in the foregoing embodiments are implemented by using software, the communications apparatus includes a memory configured to store programs and a processor configured to execute the programs stored in the memory, so that when the programs are executed, the communications apparatus is enabled to implement the communications methods provided in the foregoing embodiments.

Optionally, the memory may be a physically independent unit, or may be integrated with the processor.

Optionally, when some or all of the communications methods in the foregoing embodiments are implemented by using software, the communications apparatus may alternatively include only a processor. A memory configured to store programs is located outside the communications apparatus. The processor is connected to the memory through a circuit or wire, and is configured to read and execute the programs stored in the memory.

The processor may be a central processing unit (central processing unit, CPU), a network processor (network processor, NP), or a combination of a CPU and an NP.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory may include a volatile memory (volatile memory), for example, a random-access memory (random-access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a specific-purpose computer, a computer network, or another programmable apparatus. The computer instructions may be stored in a computer-readable storage medium, or may be transmitted by using a computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a read-only memory (read-only memory, ROM), a random-access memory (random access memory, RAM), a magnetic medium such as a floppy disk, a hard disk, a magnetic tape, a magnetic disk, an optical medium such as a digital versatile disc (digital versatile disc, DVD), or a semiconductor medium such as a solid-state drive (solid state disk, SSD).

## Claims

1. A communications method for wireless networks, comprising:
receiving, by a centralized unit, CU, from a distributed unit, DU, a correspondence between an absolute time and a radio frame number and a scheduling arrangement of each system information block, SIB,
sending (S1201), by the CU, a message comprising first absolute time corresponding to a first radio frame number of the message to a user equipment, UE;
setting (S1202), by the CU, at the SDAP or PDCP layer, time information which corresponds to a data unit to be sent to the UE.

2. The communications method of claim 1, wherein the first absolute time corresponding to the first radio frame number is the first absolute time corresponding to the first radio frame number end boundary.

3. The communications method of claim 1 or 2, wherein the first absolute time comprises an offset time after a fixed absolute time.

4. The communications method of any one of claims 1-3, wherein the sending, by the CU, a first absolute time comprises:
sending, by the CU, the first absolute time using a downlink information transfer message.

5. The communications method of any one of claims 1-3, wherein the sending, by the CU, a first absolute time comprises:
sending, by the CU, the first absolute time using a broadcast message.

6. A wireless communications system, comprising:
a distributed unit, DU, and
a centralized unit, CU;
the DU is configured to send a correspondence between an absolute time and a radio frame number and a scheduling arrangement of each system information block, SIB, to the CU;
the CU is configured to set, at the SDAP or PDCP layer, time information which corresponds to a data unit to be sent to a user equipment, UE; and
the CU is further configured to send a message comprising first absolute time corresponding to a first radio frame number of the message to the UE.

7. The communications system of claim 6, wherein the first absolute time corresponding to the first radio frame number is the first absolute time corresponding to the first radio frame number end boundary.

8. The communications system of claim 6 or 7, wherein the first absolute time comprises an offset time after a fixed absolute time.

9. The communications system of any one of claims 6-8, wherein a downlink information transfer message is used by the CU to send the first absolute time.

10. The communications system of any one of claims 6-8, wherein a broadcast message is used by the CU to send the first absolute time.

11. A centralized unit, CU, configured to perform any of the methods according to claims 1 to 5.

12. A computer-readable storage medium comprising instructions which, when executed by a processor of a centralized unit, CU, cause the CU to carry out the method according to any one of claims 1 to 5.

## Patentansprüche

1. Kommunikationsverfahren für drahtlose Netzwerke, umfassend:
Empfangen einer Entsprechung zwischen einer absoluten Zeit und einer Funkrahmennummer und einer Planungsanordnung jedes Systeminformationsblocks (SIB) durch eine zentralisierte Einheit (CU - Centralized Unit) von einer verteilten Einheit (DU - Distributed Unit)
Senden (S1201) einer Nachricht, die eine erste absolute Zeit umfasst, die einer ersten Funkrahmennummer der Nachricht entspricht, durch die CU an ein Benutzergerät (UE - User Equipment);
Einstellen (S1202) von Zeitinformationen, die einer an das UE zu sendenden Dateneinheit entsprechen, durch die CU auf der SDAP- oder PDCP-Ebene.

2. Kommunikationsverfahren nach Anspruch 1, wobei die erste absolute Zeit, die der ersten Funkrahmennummer entspricht, die erste absolute Zeit ist, die der Endgrenze der ersten Funkrahmennummer entspricht.

3. Kommunikationsverfahren nach Anspruch 1 oder 2, wobei die erste absolute Zeit eine Versatzzeit nach einer festen absoluten Zeit umfasst.

4. Kommunikationsverfahren nach einem der Ansprüche 1-3, wobei das Senden einer ersten absoluten Zeit durch die CU Folgendes umfasst:
Senden der ersten absoluten Zeit durch die CU unter Verwendung einer Downlink-Informationsübertragungsnachricht.

5. Kommunikationsverfahren nach einem der Ansprüche 1-3, wobei das Senden einer ersten absoluten Zeit durch die CU Folgendes umfasst:
Senden der ersten absoluten Zeit durch die CU unter Verwendung einer Broadcast-Nachricht.

6. Drahtloses Kommunikationssystem, umfassend:
eine verteilte Einheit (DU) und
eine zentralisierte Einheit (CU);
wobei die DU dazu konfiguriert ist, eine Korrespondenz zwischen einer absoluten Zeit und einer Funkrahmennummer sowie einer Planungsanordnung für jeden Systeminformationsblock (SIB) an die CU zu senden;
die CU dazu konfiguriert ist, auf der SDAP- oder PDCP-Ebene Zeitinformationen einzustellen, die einer Dateneinheit entsprechen, die an ein Benutzergerät (UE) gesendet werden soll; und
die CU ferner dazu konfiguriert ist, eine Nachricht umfassend eine erste absolute Zeit, die einer ersten Funkrahmennummer der Nachricht entspricht, an das UE zu senden.

7. Kommunikationssystem nach Anspruch 6, wobei die erste absolute Zeit, die der ersten Funkrahmennummer entspricht, die erste absolute Zeit ist, die der Endgrenze der ersten Funkrahmennummer entspricht.

8. Kommunikationssystem nach Anspruch 6 oder 7, wobei die erste absolute Zeit eine Versatzzeit nach einer festen absoluten Zeit umfasst.

9. Kommunikationssystem nach einem der Ansprüche 6-8, wobei die CU eine Downlink-Informationsübertragungsnachricht verwendet, um die erste absolute Zeit zu senden.

10. Kommunikationssystem nach einem der Ansprüche 6-8, wobei die CU eine Broadcast-Nachricht verwendet, um die erste absolute Zeit zu senden.

11. Zentralisierte Einheit, CU, die dazu konfiguriert ist, ein beliebiges der Verfahren nach Anspruch 1-5 durchzuführen.

12. Computerlesbares Speichermedium, umfassend Anweisungen, die bei Ausführung durch einen Prozessor einer zentralisierten Einheit, CU, bewirken, dass die CU das Verfahren nach einem der Ansprüche 1 bis 5 ausführt.

## Revendications

1. Procédé de communication sans fil, comprenant :
la réception, par une unité centralisée, CU, d'une unité distribuée, DU, d'une correspondance entre un temps absolu et un numéro de trame radio et un agencement de planification de chaque bloc d'informations système, SIB,
l'envoi (S1201), par la CU, d'un message comprenant un premier temps absolu correspondant à un premier numéro de trame radio du message à un équipement utilisateur, UE ;
la définition (S1202), par la CU, au niveau de la couche SDAP ou PDCP, des informations temporelles qui correspondent à une unité de données à envoyer à l'UE.

2. Procédé de communication selon la revendication 1, dans lequel le premier temps absolu correspondant au premier numéro de trame radio est le premier temps absolu correspondant à la limite d'extrémité du premier numéro de trame radio.

3. Procédé de communication selon la revendication 1 ou 2, dans lequel le premier temps absolu comprend un temps décalé après un temps absolu fixe.

4. Procédé de communication selon l'une quelconque des revendications 1 à 3, dans lequel l'envoi, par la CU, d'un premier temps absolu comprend :
l'envoi, par la CU, du premier temps absolu à l'aide d'un message de transfert d'informations en liaison descendante.

5. Procédé de communication selon l'une quelconque des revendications 1 à 3, dans lequel l'envoi, par la CU, d'un premier temps absolu comprend :
l'envoi, par la CU, du premier temps absolu à l'aide d'un message diffusé.

6. Système de communication sans fil, comprenant :
une unité distribuée, DU, et
une unité centralisée, CU ;
la DU est configurée pour envoyer une correspondance entre un temps absolu et un numéro de trame radio et un agencement de planification de chaque bloc d'informations système, SIB, à la CU ;
la CU est configurée pour définir, au niveau de la couche SDAP ou PDCP, les informations temporelles qui correspondent à une unité de données à envoyer à un équipement utilisateur, UE ; et
la CU est en outre configurée pour envoyer à l'UE un message comprenant un premier temps absolu correspondant à un premier numéro de trame radio du message.

7. Système de communication selon la revendication 6, dans lequel le premier temps absolu correspondant au premier numéro de trame radio est le premier temps absolu correspondant à la limite d'extrémité du premier numéro de trame radio.

8. Système de communication selon la revendication 6 ou 7, dans lequel le premier temps absolu comprend un temps décalé après un temps absolu fixe.

9. Système de communication selon l'une quelconque des revendications 6 à 8, dans lequel un message de transfert d'informations en liaison descendante est utilisé par la CU pour envoyer le premier temps absolu.

10. Système de communication selon l'une quelconque des revendications 6 à 8, dans lequel un message diffusé est utilisé par la CU pour envoyer le premier temps absolu.

11. Unité centralisée, CU, configurée pour exécuter l'un quelconque des procédés selon les revendications 1 à 5.

12. Support de stockage lisible par ordinateur comprenant des instructions qui, lorsqu'elles sont exécutées par un processeur d'une unité centralisée, CU, amènent la CU à mettre en œuvre le procédé selon l'une quelconque des revendications 1 à 5.
